(19) Europäisches Patentamt / European Patent Office / Office européen des brevets

(11) **EP 4 510 717 A1**

(12) **EUROPEAN PATENT APPLICATION**

(43) Date of publication:
**19.02.2025   Bulletin 2025/08**

(21) Application number: **23191778.2**

(22) Date of filing: **16.08.2023**

(51) International Patent Classification (IPC):
**H04W 52/36** (2009.01)    **H04B 7/06** (2006.01)
**H04W 52/14** (2009.01)

(52) Cooperative Patent Classification (CPC):
**H04W 52/365; H04B 7/06; H04W 52/146;**
**H04W 52/367**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(71) Applicant: **Panasonic Intellectual Property
Corporation
of America
Torrance, CA 90504 (US)**

(72) Inventors:
• **ZEINEDDINE, Khalid
63225 Langen (DE)**
• **SUZUKI, Hidetoshi
Osaka, 571-8501 (JP)**
• **LI, Hongchao
63225 Langen (DE)**

(74) Representative: **Grünecker Patent- und
Rechtsanwälte
PartG mbB
Leopoldstraße 4
80802 München (DE)**

(54)    **SYSTEM AND METHODS FOR POWER HEADROOM REPORTING FOR SIMULTANEOUS
MULTI-PANEL UPLINK TRANSMISSION**

(57)    Provided are a communication device, a base station, and methods for a communication device and a base station. The communication device comprises a transceiver and a circuitry. The circuitry, when in operation, generates a power headroom report including, for each of one or more groups of a plurality of spatial directions, a power reduction requirement indication. The transceiver, when in operation, transmits the power headroom report. The circuitry may also determine whether to indicate a power reduction requirement for each of a plurality of spatial directions or for each of one or more groups of the plurality of spatial directions, and, based on the result of the determination, generate the power headroom report..

100

Power headroom group reporting for STxMP

**Fig. 10**

EP 4 510 717 A1

**Description**

**1. Technical Field**

The present disclosure relates to transmission and reception of signals in a communication system. In particular, the present disclosure relates to methods and apparatuses for such transmission and reception.

**2. Description of the Related Art**

The 3rd Generation Partnership Project (3GPP) works at technical specifications for the next generation cellular technology, which is also called fifth generation (5G) including "New Radio" (NR) radio access technology (RAT), which operates in frequency ranges up to 100 GHz. The NR is a follower of the technology represented by Long Term Evolution (LTE) and LTE Advanced (LTE-A).

For systems like LTE, LTE-A, and NR, further modifications and options may facilitate efficient operation of the communication system as well as particular devices pertaining to the system.

**SUMMARY**

One non-limiting and exemplary embodiment facilitates power headroom reporting by providing the possibility of including into the power headroom report an indication of power reduction requirement determined for a group of spatial directions.

In an embodiment, the techniques disclosed herein feature a communication apparatus comprising circuitry and a transceiver. The circuitry in operation generates a power headroom report including, for each of one or more groups of a plurality of spatial directions, a power reduction requirement indication. The transceiver (in operation) transmits the power headroom report.

In an embodiment, the techniques disclosed herein feature a communication apparatus comprising circuitry and a transceiver. The circuitry in operation determines whether to indicate a power reduction requirement for each of a plurality of spatial directions or for each of one or more groups of the plurality of spatial directions, and, based on the result of the determination, generates a power headroom report including, for each of the plurality of spatial directions or for each of the one or more groups of the plurality of spatial directions, a power reduction requirement indication. The transceiver (in operation) transmits the power headroom report.

It should be noted that general or specific embodiments may be implemented as a system, a method, an integrated circuit, a computer program, a storage medium, or any selective combination thereof.

Additional benefits and advantages of the disclosed embodiments will become apparent from the specification and drawings. The benefits and/or advantages may be individually obtained by the various embodiments and features of the specification and drawings, which need not all be provided in order to obtain one or more of such benefits and/or advantages.

**BRIEF DESCRIPTION OF THE FIGURES**

In the following exemplary embodiments are described in more detail with reference to the attached figures and drawings.

Fig. 1        shows an exemplary architecture for a 3GPP NR system.

Fig. 2        is a schematic drawing which shows functional split between NG-RAN and 5GC.

Fig. 3        is a sequence diagram for RRC connection setup/reconfiguration procedures.

Fig. 4        is a schematic drawing showing usage scenarios of Enhanced mobile broadband (eMBB), Massive Machine Type Communications (mMTC) and Ultra Reliable and Low Latency Communications (URLLC).

Fig. 5        is a block diagram showing an exemplary 5G system architecture for a non-roaming scenario.

Fig. 6        is a block diagram showing a single-DCI simultaneous transmission with multi-panel (STxMP) transmission of PUSCH, in which one UE transmits over two panels PUSCH to two respective TRPs based on a single DCI.

**Fig. 7** is a block diagram showing a Multi-DCI STxMP transmission of PUSCH, in which one UE transmits over two panels PUSCH to two respective TRPs based on two respective DCIs.

**Fig. 8** is a schematic drawing illustrating syntax of an Enhanced Single-Entry PHR MAC CE.

**Fig. 9** is a schematic drawing illustrating syntax of an Enhanced Single-Entry PHR for multiple TRP MAC CE.

**Fig. 10** is a schematic drawing illustrating a power headroom group reporting for STxM P.

**Fig. 11** is a block diagram illustrating an exemplary simultaneous transmission using multiple panels (here 2) and based on SDM.

**Fig. 12** is a schematic drawing illustrating an exemplary PHR including a toggle bit T for indicating whether the reporting is group based (meaning a group of spatial directions) or beam based (meaning individual spatial directions) and following sub-embodiment 1-1.

**Fig. 13** is an exemplary table defining a semantics of the field combination $G_1G_2G_3$ from the PHR of Fig. 12.

**Fig. 14** is a schematic drawing illustrating an exemplary PHR including the toggle bit T following sub-embodiment 1-2.

**Fig. 15** is an exemplary table defining a semantics of the field combination $G_1G_2G_3$ from the PHR of Fig. 14.

**Fig. 16** is a schematic drawing illustrating an exemplary PHR following sub-embodiment 1-3 for T = 1.

**Fig. 17** is a schematic drawing illustrating an exemplary PHR following sub-embodiment 1-3 for T = 0.

**Fig. 18** is an exemplary table defining a semantics of the field combination $G_1G_2G_3$ from the PHR of Figs. 16 and 17.

**Fig. 19** is a schematic drawing illustrating an exemplary PHR including the toggle bit T following sub-embodiment 1-4.

**Fig. 20** is an exemplary table defining a semantics of the field combination $G_1G_2G_3$ from the PHR of Fig. 19.

**Fig. 21** is a schematic drawing illustrating an exemplary PHR following sub-embodiment 2-1.

**Fig. 22** is a schematic drawing illustrating an exemplary PHR following sub-embodiment 2-2.

**Fig. 23** is a schematic drawing illustrating an exemplary PHR following sub-embodiment 2-3.

**Fig. 24** is a schematic drawing illustrating an exemplary PHR following sub-embodiment 2-4.

**Fig. 25** is a schematic drawing illustrating an exemplary PHR following embodiment 3.

**Fig. 26** is an exemplary table defining a semantics of the field combination $B_1B_2B_3$ from the PHR of Fig. 25.

**Fig. 27** is a block diagram illustrating a communication system, as well as a UE and a network node, which are parts of the communication system.

**Fig. 28** is a block diagram illustrating functional structure of circuitry of the UE.

**Fig. 29** is a block diagram illustrating functional structure of circuitry of the network node.

**Fig. 30** is a flow diagram illustrating steps performed in an exemplary method for the UE.

**Fig. 31** is a flow diagram illustrating steps performed in an exemplary method for the network node.

**EP 4 510 717 A1**

## DETAILED DESCRIPTION

*5G NR system architecture and protocol stacks*

3GPP has been working at the next release for the 5th generation cellular technology, simply called 5G, including the development of a new radio access technology (NR) operating in frequencies ranging up to 100 GHz. The first version of the 5G standard was completed at the end of 2017, which allows proceeding to 5G NR standard-compliant trials and commercial deployments of smartphones.

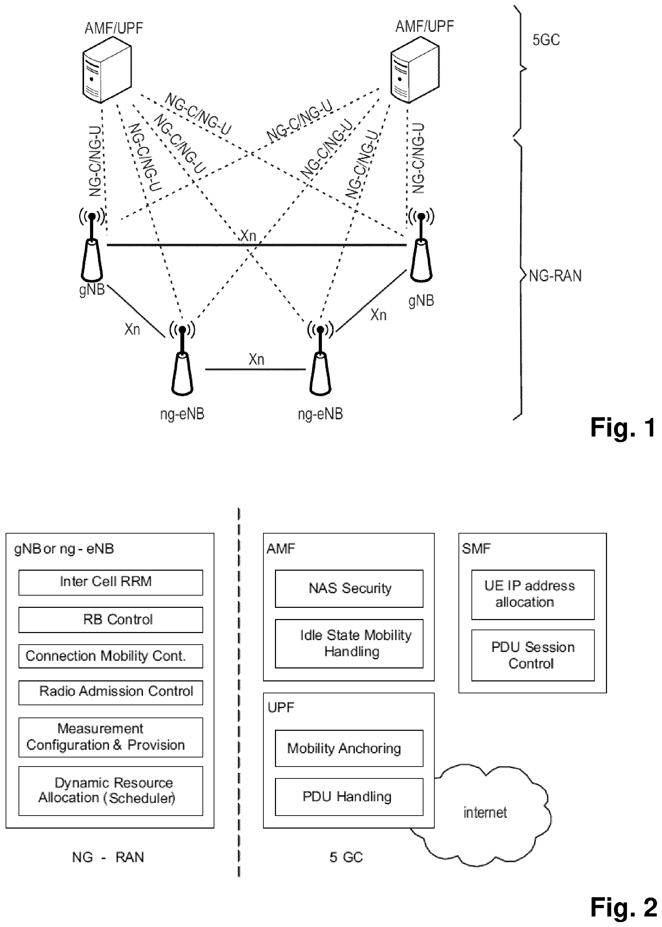

Among other things, the overall system architecture assumes an NG-RAN (Next Generation - Radio Access Network) that comprises gNBs (gNodeB), providing the NG-radio access user plane (SDAP/PDCP/RLC/MAC/PHY) and control plane (RRC, Radio Resource Control) protocol terminations towards the UE. The gNBs are interconnected with each other by means of the Xn interface. The gNBs are also connected by means of the Next Generation (NG) interface to the NGC (Next Generation Core), more specifically to the AMF (Access and Mobility Management Function) (e.g. a particular core entity performing theAMF) by means of the NG-C interface and to the UPF (User Plane Function) (e.g. a particular core entity performing the UPF) by means of the NG-U interface. The NG-RAN architecture is illustrated in Fig. 1 (see e.g. 3GPP TS 38.300 v15.6.0, section 4).

The user plane protocol stack for NR (see e.g. 3GPP TS 38.300, section 4.4.1) comprises the PDCP (Packet Data Convergence Protocol, see section 6.4 of TS 38.300), RLC (Radio Link Control, see section 6.3 of TS 38.300) and MAC (Medium Access Control, see section 6.2 of TS 38.300) sublayers, which are terminated in the gNB on the network side. Additionally, a new access stratum (AS) sublayer (SDAP, Service Data Adaptation Protocol) is introduced above PDCP (see e.g. sub-clause 6.5 of 3GPP TS 38.300). A control plane protocol stack is also defined for NR (see for instance TS 38.300, section 4.4.2). An overview of the Layer 2 functions is given in sub-clause 6 of TS 38.300. The functions of the PDCP, RLC and MAC sublayers are listed respectively in sections 6.4, 6.3, and 6.2 of TS 38.300. The functions of the RRC layer are listed in sub-clause 7 of TS 38.300.

For instance, the Medium-Access-Control layer handles logical-channel multiplexing, and scheduling and scheduling-related functions, including handling of different numerologies.

The physical layer (PHY) is for example responsible for coding, PHY HARQ processing, modulation, multi-antenna processing, and mapping of the signal to the appropriate physical time-frequency resources. It also handles mapping of transport channels to physical channels. The physical layer provides services to the MAC layer in the form of transport channels. A physical channel corresponds to the set of time-frequency resources used for transmission of a particular transport channel, and each transport channel is mapped to a corresponding physical channel. For instance, the physical channels are PRACH (Physical Random Access Channel), PUSCH (Physical Uplink Shared Channel) and PUCCH (Physical Uplink Control Channel) for uplink and PDSCH (Physical Downlink Shared Channel), PDCCH (Physical Downlink Control Channel) and PBCH (Physical Broadcast Channel) for downlink.

Use cases / deployment scenarios for NR could include enhanced mobile broadband (eMBB), ultra-reliable low-latency communications (URLLC), and/or massive machine type communication (mMTC), which have diverse requirements in terms of data rates, latency, and coverage. For example, eMBB is expected to support peak data rates (20Gbps for downlink and 10Gbps for uplink) and user-experienced data rates in the order of three times what is offered by IMT-Advanced. On the other hand, in case of URLLC, the tighter requirements are put on ultra-low latency (0.5ms for UL and DL each for user plane latency) and high reliability ($1-10^{-5}$ within 1ms). Finally, mMTC may preferably require high connection density (1,000,000 devices/km$^2$ in an urban environment), large coverage in harsh environments, and extremely long-life battery for low cost devices (15 years).

Therefore, the OFDM numerology (e.g. subcarrier spacing, OFDM symbol duration, cyclic prefix (CP) duration, number of symbols per scheduling interval) that is suitable for one use case might not work well for another. For example, low-latency services may preferably require a shorter symbol duration (and thus larger subcarrier spacing) and/or fewer symbols per scheduling interval (aka, TTI) than an mMTC service. Furthermore, deployment scenarios with large channel delay spreads may preferably require a longer CP duration than scenarios with short delay spreads. The subcarrier spacing should be optimized accordingly to retain the similar CP overhead. NR may support more than one value of subcarrier spacing. Correspondingly, subcarrier spacing of 15kHz, 30kHz, 60kHz... are being considered at the moment. The symbol duration $T_u$ and the subcarrier spacing $\Delta f$ are directly related through the formula $\Delta f = 1 / T_u$. In a similar manner as in LTE systems, the term "resource element" can be used to denote a minimum resource unit being composed of one subcarrier for the length of one OFDM/SC-FDMA symbol.

In the new radio system 5G-NR for each numerology and carrier a resource grid of subcarriers and OFDM symbols is defined respectively for uplink and downlink. Each element in the resource grid is called a resource element and is identified based on the frequency index in the frequency domain and the symbol position in the time domain (see 3GPP TS 38.211 v15.6.0).

In NR, a resource block (RB) is defined as 12 consecutive subcarriers in frequency domain. Resource blocks are numbered from zero upwards in frequency domain as Common resource blocks for a subcarrier spacing configuration.

4

Physical resource blocks (PRBs) are defined within a bandwidth part (a subset of contiguous common resource blocks) and numbered per bandwidth part.

*5G NR functional split between NG-RAN and 5GC*

Fig. 2 illustrates functional split between NG-RAN and 5GC. NG-RAN logical node is a gNB or ng-eNB (next generation eNB). The 5GC has logical nodes AMF, UPF and SMF.

In particular, the gNB and ng-eNB host the following main functions:

- Functions for Radio Resource Management such as Radio Bearer Control, Radio Admission Control, Connection Mobility Control, Dynamic allocation of resources to UEs in both uplink and downlink (scheduling);

- IP header compression, encryption and integrity protection of data;

- Selection of an AMF at UE attachment when no routing to an AMF can be determined from the information provided by the UE;

- Routing of User Plane data towards UPF(s);

- Routing of Control Plane information towards AMF;

- Connection setup and release;

- Scheduling and transmission of paging messages;

- Scheduling and transmission of system broadcast information (originated from the AMF or CAM);

- Measurement and measurement reporting configuration for mobility and scheduling;

- Transport level packet marking in the uplink;

- Session Management;

- Support of Network Slicing;

- QoS Flow management and mapping to data radio bearers;

- Support of UEs in RRC_INACTIVE state;

- Distribution function for NAS (Non-access stratum) messages;

- Radio access network sharing;

- Dual Connectivity;

- Tight interworking between NR and E-UTRA.

The Access and Mobility Management Function (AMF) hosts the following main functions:

- Non-Access Stratum, NAS, signaling termination;

- NAS signaling security;

- Access Stratum, AS, Security control;

- Inter Core Network, CN, node signaling for mobility between 3GPP access networks;

- Idle mode UE Reachability (including control and execution of paging retransmission);

- Registration Area management;

- Support of intra-system and inter-system mobility;

- Access Authentication;

- Access Authorization including check of roaming rights;

- Mobility management control (subscription and policies);

- Support of Network Slicing;

- Session Management Function, SMF, selection.

Furthermore, the User Plane Function, UPF, hosts the following main functions:

- Anchor point for Intra-/Inter-RAT mobility (when applicable);

- External PDU session point of interconnect to Data Network;

- Packet routing & forwarding;

- Packet inspection and User plane part of Policy rule enforcement;

- Traffic usage reporting;

- Uplink classifier to support routing traffic flows to a data network;

- Branching point to support multi-homed PDU session;

- QoS handling for user plane, e.g. packet filtering, gating, UUDL rate enforcement;

- Uplink Traffic verification (SDF to QoS flow mapping);

- Downlink packet buffering and downlink data notification triggering.

Finally, the Session Management function, SMF, hosts the following main functions:

- Session Management;

- UE IP address allocation and management;

- Selection and control of UP function;

- Configures traffic steering at User Plane Function, UPF, to route traffic to proper destination;

- Control part of policy enforcement and QoS;

- Downlink Data Notification.

*RRC connection setup and reconfiguration procedures*

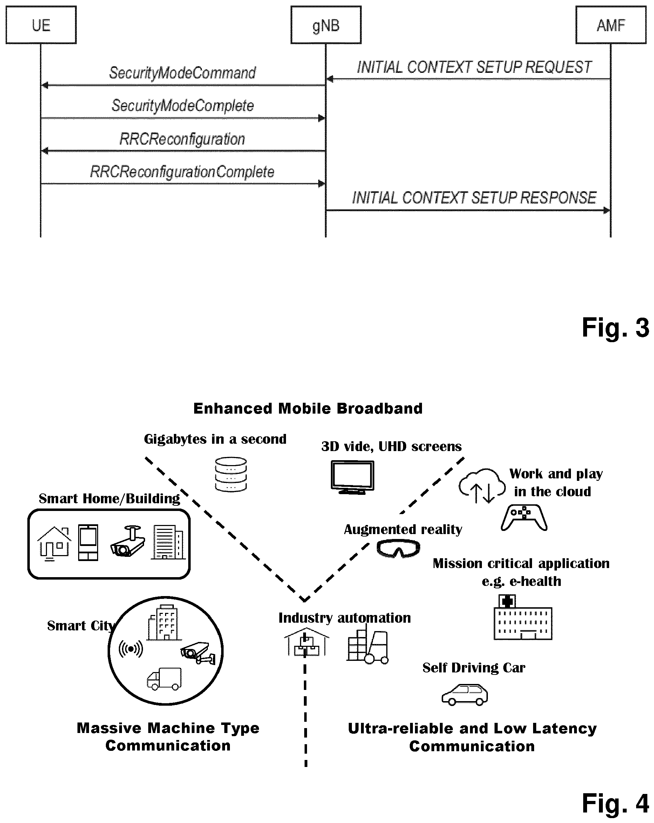

Fig. 3 illustrates some interactions between a UE, gNB, and AMF (a 5GC entity) in the context of a transition of the UE from RRC_IDLE to RRC_CONNECTED for the NAS part (see TS 38.300 v15.6.0).

RRC is a higher layer signaling (protocol) used for UE and gNB configuration. In particular, this transition involves that the AMF prepares the UE context data (including e.g. PDU session context, the Security Key, UE Radio Capability and UE Security Capabilities, etc.) and sends it to the gNB with the INITIAL CONTEXT SETUP REQUEST. Then, the gNB activates the AS security with the UE, which is performed by the gNB transmitting to the UE a SecurityModeCommand message and by the UE responding to the gNB with the SecurityModeComplete message. Afterwards, the gNB performs the reconfiguration to setup the Signaling Radio Bearer 2, SRB2, and Data Radio Bearer(s), DRB(s) by means of transmitting to the UE the RRCReconfiguration message and, in response, receiving by the gNB the RRCReconfigurationComplete from the UE. For a signalling-only connection, the steps relating to the RRCReconfiguration are skipped since SRB2 and DRBs are not setup. Finally, the gNB informs the AMF that the setup procedure is completed with the INITIAL CONTEXT SETUP RESPONSE.

In the present disclosure, thus, an entity (for example AMF, SMF, etc.) of a 5th Generation Core (5GC) is provided that comprises control circuitry which, in operation, establishes a Next Generation (NG) connection with a gNodeB, and a transmitter which, in operation, transmits an initial context setup message, via the NG connection, to the gNodeB to cause a signaling radio bearer setup between the gNodeB and a user equipment (UE). In particular, the gNodeB transmits a Radio Resource Control, RRC, signaling containing a resource allocation configuration information element to the UE via the signaling radio bearer. The UE then performs an uplink transmission or a downlink reception based on the resource allocation configuration.

*Usage Scenarios of IMT for 2020 and beyond*

Fig. 4 illustrates some of the use cases for 5G NR. In 3rd generation partnership project new radio (3GPP NR), three use cases are being considered that have been envisaged to support a wide variety of services and applications by IMT-2020. The specification for the phase 1 of enhanced mobile-broadband (eMBB) has been concluded. In addition to further extending the eMBB support, the current and future work would involve the standardization for ultra-reliable and low-latency communications (URLLC) and massive machine-type communications. Fig. 4 illustrates some examples of envisioned usage scenarios for IMT for 2020 and beyond (see e.g. Fig. 2 of ITU-R M.2083).

The URLLC use case has stringent requirements for capabilities such as throughput, latency and availability and has been envisioned as one of the enablers for future vertical applications such as wireless control of industrial manufacturing or production processes, remote medical surgery, distribution automation in a smart grid, transportation safety, etc. Ultra-reliability for URLLC is to be supported by identifying the techniques to meet the requirements set by TR 38.913. For NR URLLC in Release 15, key requirements include a target user plane latency of 0.5 ms for UL (uplink) and 0.5 ms for DL (downlink). The general URLLC requirement for one transmission of a packet is a BLER (block error rate) of 1E-5 for a packet size of 32 bytes with a user plane latency of 1ms.

From the physical layer perspective, reliability can be improved in a number of possible ways. The current scope for improving the reliability involves defining separate CQI tables for URLLC, more compact DCI (Downlink Control Information) formats, repetition of PDCCH, etc. However, the scope may widen for achieving ultra-reliability as the NR becomes more stable and developed (for NR URLLC key requirements). Particular use cases of NR URLLC in Rel. 15 include Augmented Reality/Virtual Reality (AR/VR), e-health, e-safety, and mission-critical applications.

Moreover, technology enhancements targeted by NR URLLC aim at latency improvement and reliability improvement. Technology enhancements for latency improvement include configurable numerology, non slot-based scheduling with flexible mapping, grant free (configured grant) uplink, slot-level repetition for data channels, and downlink pre-emption. Pre-emption means that a transmission for which resources have already been allocated is stopped, and the already allocated resources are used for another transmission that has been requested later, but has lower latency / higher priority requirements. Accordingly, the already granted transmission is pre-empted by a later transmission. Pre-emption is applicable independent of the particular service type. For example, a transmission for a service-type A (URLLC) may be pre-empted by a transmission for a service type B (such as eMBB). Technology enhancements with respect to reliability improvement include dedicated CQI/MCS tables for the target BLER of 1E-5.

The use case of mMTC (massive machine type communication) is characterized by a very large number of connected devices typically transmitting a relatively low volume of non-delay sensitive data. Devices are required to be low cost and to have a very long battery life. From NR perspective, utilizing very narrow bandwidth parts is one possible solution to have power saving from UE perspective and enable long battery life.

As mentioned above, it is expected that the scope of reliability in NR becomes wider. One key requirement to all the cases, and especially necessary for URLLC and mMTC, is high reliability or ultra-reliability. Several mechanisms can be considered to improve the reliability from radio perspective and network perspective. In general, there are a few key potential areas that can help improve the reliability. Among these areas are compact control channel information, data/control channel repetition, and diversity with respect to frequency, time and/or the spatial domain. These areas are applicable to reliability in general, regardless of particular communication scenarios.

For NR URLLC, further use cases with tighter requirements have been identified such as factory automation, transport industry and electrical power distribution. The tighter requirements are higher reliability (up to $10^{-6}$ level), higher availability, packet sizes of up to 256 bytes, time synchronization down to the order of a few $\mu$s where the value can be one or a few $\mu$s depending on frequency range and short latency in the order of 0.5 to 1 ms in particular a target user plane latency of 0.5 ms, depending on the use cases.

Moreover, for NR URLLC, several technology enhancements from the physical layer perspective have been identified. Among these are PDCCH (Physical Downlink Control Channel) enhancements related to compact DCI, PDCCH repetition, increased PDCCH monitoring. Moreover, UCI (Uplink Control Information) enhancements are related to enhanced HARQ (Hybrid Automatic Repeat Request) and CSI feedback enhancements. Also PUSCH enhancements related to mini-slot level hopping and retransmission/repetition enhancements have been identified. The term "mini-slot" refers to a Transmission Time Interval (TTI) including a smaller number of symbols than a slot (a slot comprising e.g. fourteen symbols).

In slot-based scheduling or assignment, a slot corresponds to the timing granularity (TTI - transmission time interval) for scheduling assignment. In general, TTI determines the timing granularity for scheduling assignment. One TTI is the time interval in which given signals is mapped to the physical layer. For instance, conventionally, the TTI length can vary from 14-symbols (slot-based scheduling) to 2-symbols (non-slot based scheduling). Downlink (DL) and uplink (UL) transmissions are specified to be organized into frames (10 ms duration) consisting of 10 subframes (1 ms duration). In slot-based transmission, a subframe is further divided into slots, the number of slots being defined by the numerology / subcarrier spacing. The specified values range between 10 slots per frame (1 slot per subframe) for a subcarrier spacing of 15 kHz to 80 slots per frame (8 slots per subframe) for a subcarrier spacing of 120 kHz. The number of OFDM symbols per slot is 14 for normal cyclic prefix and 12 for extended cyclic prefix (see section 4.1 (general frame structure), 4.2 (Numerologies), 4.3.1 (frames and subframes) and 4.3.2 (slots) of the 3GPP TS 38.211 V15.3.0, Physical channels and modulation, 2018-09). However, assignment of time resources for transmission may also be non-slot based. In particular, the TTIs in non slot-based assignment may correspond to mini-slots rather than slots. I.e., one or more mini-slots may be assign to a requested transmission of data/control signaling. In non slot-based assignment, the minimum length of a TTI may for instance be 1 or 2 OFDM symbols.

*QoS control*

The 5G QoS (Quality of Service) model is based on QoS flows and supports both QoS flows that require guaranteed flow bit rate (GBR QoS flows) and QoS flows that do not require guaranteed flow bit rate (non-GBR QoS Flows). At NAS level, the QoS flow is thus the finest granularity of QoS differentiation in a PDU session. A QoS flow is identified within a PDU session by a QoS flow ID (QFI) carried in an encapsulation header over NG-U interface.

For each UE, 5GC establishes one or more PDU Sessions. For each UE, the NG-RAN establishes at least one Data Radio Bearers (DRB) together with the PDU Session, and additional DRB(s) for QoS flow(s) of that PDU session can be subsequently configured (it is up to NG-RAN when to do so), e.g. as shown above with reference to Fig. 3. The NG-RAN maps packets belonging to different PDU sessions to different DRBs. NAS level packet filters in the UE and in the 5GC associate UL and DL packets with QoS Flows, whereas AS-level mapping rules in the UE and in the NG-RAN associate UL and DL QoS Flows with DRBs.

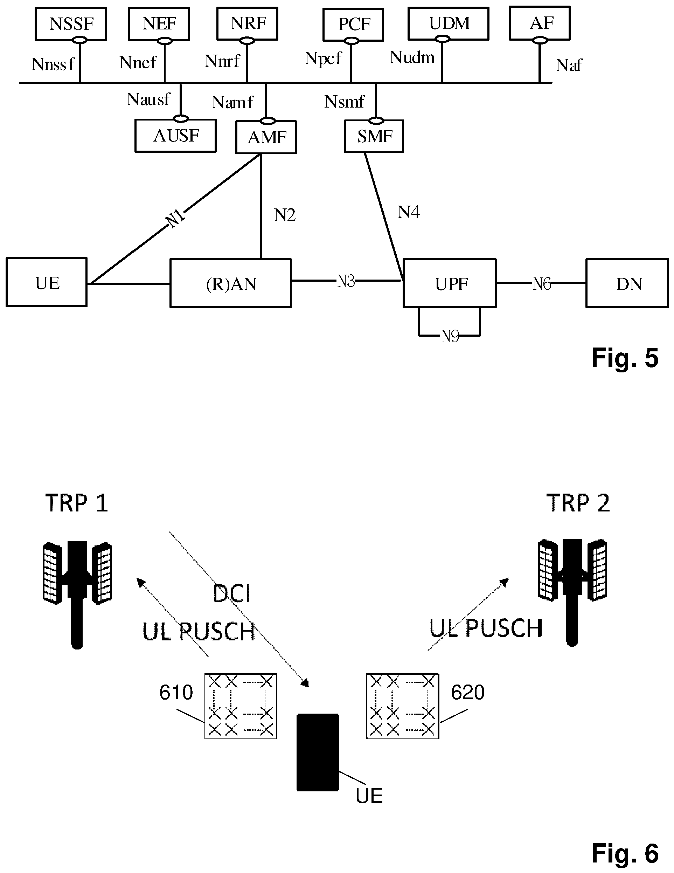

Fig. 5 illustrates a 5G NR non-roaming reference architecture (see TS 23.501 v16.1.0, section 4.23). An Application Function (AF), e.g. an external application server hosting 5G services, exemplarily described in Fig. 4, interacts with the 3GPP Core Network in order to provide services, for example to support application influence on traffic routing, accessing Network Exposure Function (NEF) or interacting with the Policy framework for policy control (see Policy Control Function, PCF), e.g. QoS control. Based on operator deployment, Application Functions considered to be trusted by the operator can be allowed to interact directly with relevant Network Functions. Application Functions not allowed by the operator to directly access the Network Functions use the external exposure framework via the NEF to interact with relevant Network Functions.

Fig. 5 shows further functional units of the 5G architecture, namely Network Slice Selection Function (NSSF), Network Repository Function (NRF), Unified Data Management (UDM), Authentication Server Function (AUSF), Access and Mobility Management Function (AMF), Session Management Function (SMF), and Data Network (DN), e.g. operator services, Internet access or 3rd party services. All of or a part of the core network functions and the application services may be deployed and running on cloud computing environments.

In the present disclosure, thus, an application server (for example, AF of the 5G architecture), is provided that comprises a transmitter, which, in operation, transmits a request containing a QoS requirement for at least one of URLLC, eMMB and mMTC services to at least one of functions (for example NEF, AMF, SMF, PCF, UPF, etc.) of the 5GC to establish a PDU session including a radio bearer between a gNodeB and a UE in accordance with the QoS requirement and control circuitry, which, in operation, performs the services using the established PDU session.

*Control Signals*

In the present disclosure, the downlink control signal (information) related to the present disclosure may be a signal (information) transmitted through PDCCH of the physical layer or may be a signal (information) transmitted through a MAC Control Element (CE) of the higher layer or the RRC. The downlink control signal may be a pre-defined signal (information).

The uplink control signal (information) related to the present disclosure may be a signal (information) transmitted through PUCCH of the physical layer or may be a signal (information) transmitted through a MAC CE of the higher layer or the RRC. Further, the uplink control signal may be a pre-defined signal (information). The uplink control signal may be replaced with uplink control information (UCI), the 1st stage sidelink control information (SCI) or the 2nd stage SCI.

*Reference Signals*

In the present disclosure, the reference signals are signals known to both a base station and a mobile station and each reference signal may be referred to as a Reference Signal (RS) or sometimes a pilot signal. The reference signal may be any of a Demodulation RS (DMRS), a Channel State Information - Reference Signal (CSI-RS), a Tracking Reference Signal (TRS), a Phase Tracking Reference Signal (PTRS), a Cell-specific Reference Signal (CRS), and a Sounding Reference Signal (SRS).

*Time Intervals*

In the present disclosure, time resource units are not limited to one or a combination of slots and symbols, and may be time resource units, such as frames, superframes, subframes, slots, time slot subslots, minislots, or time resource units, such as symbols, Orthogonal Frequency Division Multiplexing (OFDM) symbols, Single Carrier-Frequency Division Multiplexing Access (SC-FDMA) symbols, or other time resource units. The number of symbols included in one slot is not limited to any number of symbols exemplified in the embodiment(s) described above, and may be other numbers of symbols.

*Frequency Bands*

The present disclosure may be applied to any of a licensed band and an unlicensed band. Each band may include one or more component carriers. Each component carrier constitutes a time-frequency resource grid including resource elements, each resource element defined by a subcarrier in frequency domain and a symbol in time domain.

*Communication*

The present disclosure may be applied to any of a terrestrial network or a network other than a terrestrial network (NTN: Non-Terrestrial Network) using a satellite or a High Altitude Pseudo Satellite (HAPS). In addition, the present disclosure may be applied to a network having a large cell size, and a terrestrial network with a large delay compared with a symbol length or a slot length, such as an ultra-wideband transmission network.

*Downlink control channel monitoring, PDCCH, DCI*

Many of the functions operated by the UE involve the monitoring of a downlink control channel (e.g. the PDCCH, see 3GPP TS 38.300 v15.6.0, section 5.2.3) to receive e.g. particular control information or data destined to the UE.
A non-exhaustive list of these functions is given in the following:

- a paging message monitoring function,
- a system information acquisition function,
- signaling monitoring operation for a Discontinued Reception, DRX, function,
- inactivity monitoring operation for a Discontinued Reception, DRX, function,
- random access response reception for a random access function,
- reordering function of a Packet Data Convergence Protocol, PDCP, layer.

As mentioned above, the PDCCH monitoring is done by the UE so as to identify and receive information intended for the UE, such as the control information as well as the user traffic (e.g. the DCI on the PDCCH, and the user data on the PDSCH indicated by the PDCCH).
Control information in the downlink (can be termed downlink control information, DCI) has the same purpose in 5G NR as the DCI in LTE, namely being a special set of control information that e.g. schedules a downlink data channel (e.g. the PDSCH) or an uplink data channel (e.g. PUSCH). In 5G NR there are a number of different DCI Formats defined already (see TS 38.212 v15.6.0 section 7.3.1).
Said DCI formats represent predetermined formats in which respective information is formed and transmitted. In particular, DCI formats 0_1 and 1_1 are used for scheduling PUSCH and PDSCH, respectively, in one cell.

The PDCCH monitoring of each of these functions serves a particular purpose and is thus started to said end. The PDCCH monitoring is typically controlled at least based on a timer, operated by the UE. The timer has the purpose of controlling the PDCCH monitoring, e.g. limiting the maximum amount of time that the UE is to monitor the PDCCH. For instance, the UE may not need to indefinitely monitor the PDCCH, but may stop the monitoring after some time so as to be able to save power.

As mentioned above, one of the purposes of DCI on the PDCCH is the dynamic scheduling of resources in downlink or uplink or even sidelink. In particular, some formats of DCI are provided to carry indication of resources (resource allocation, RA) allocated to a data channel for a particular user. The resource allocation may include specification of resources in frequency domain and/or time domain.

*Terminology*

In the following, UEs, base stations, and procedures will be described for the new radio access technology envisioned for the 5G mobile communication systems, but which may also be used in LTE mobile communication systems or future mobile communication systems. Different implementations and variants will be explained as well. The following disclosure was facilitated by the discussions and findings as described above and may for example be based at least on part thereof.

In general, it should be noted that many assumptions have been made herein so as to be able to explain the principles underlying the present disclosure in a clear, concise and understandable manner. These assumptions are however to be understood as merely examples made herein for illustration purposes, which are not necessarily essential for the invention and should thus not limit the scope of the disclosure. A skilled person will be aware that the principles of the following disclosure and as laid out in the claims can be applied to different scenarios and in ways that are not explicitly described herein.

Moreover, some of the terms of the procedures, entities, layers etc. used in the following are closely related to LTE/LTE-A systems or to terminology used in the current 3GPP 5G standardization, even though specific terminology to be used in the context of the new radio access technology for the next communication systems is not fully decided yet or might finally change. Thus, terms could be changed in the future, without affecting the functioning of the embodiments. Consequently, a skilled person is aware that the embodiments and their scope of protection should not be restricted to particular terms exemplarily used herein for lack of newer or finally agreed terminology but should be more broadly understood in terms of functions and concepts that underlie the functioning and principles of the present disclosure. In particular:

*User Equipment*

A *terminal* or *user terminal* or *user device* or *mobile station* or *mobile node* is referred to in the LTE and NR as a *user equipment (UE).* This may be a mobile device or communication apparatus/device such as a wireless phone, smartphone, tablet computer, or an USB (universal serial bus) stick with the functionality of a user equipment. However, the term mobile device is not limited thereto, in general, a relay may also have functionality of such mobile device, and a mobile device may also work as a relay. For instance, a terminal is a physical entity (physical node) within a communication network. Still further, the communication device may be any machine-type communication device, such as IoT device or the like. One node may have several functional entities. A functional entity refers to a software or hardware module that implements and/or offers a predetermined set of functions to other functional entities of the same or another node or the network. Nodes may have one or more interfaces that attach the node to a communication facility or medium over which nodes can communicate. Similarly, a network entity may have a logical interface attaching the functional entity to a communication facility or medium over which it may communicate with other functional entities or correspondent nodes.

*Network node*

In the present disclosure, the *base station* may be a Transmission Reception Point (TRP), a clusterhead, an access point, a Remote Radio Head (RRH), an eNodeB (eNB), a gNodeB (gNB), a Base Station (BS), a Base Transceiver Station (BTS), a base unit or a gateway, for example. Further, in side link communication, a terminal may be adopted instead of a base station. The base station may be a relay apparatus that relays communication between a higher node and a terminal. The base station may be a roadside unit as well. A base station may be a *scheduling node* or *network node,* e.g. forming a part of the network for providing services to terminals. In particular, a base station may provide wireless access to terminals. Communication between the communication device (e.g. UE or terminal) and the scheduling device (e.g. base station) is typically standardized and may be defined by different layers, such as PHY, MAC, RRC etc. (see also the above discussion). In LTE and NR, the wireless interface protocol stack includes physical layer, medium access layer (MAC) and higher layers. In control plane, higher-layer protocol Radio Resource Control protocol is provided. Via RRC, the base station can control configuration of the terminals and terminals may communicate with the base station to perform control tasks such as connection and bearer establishment, modification, or the like, measurements, and other functions. The terminology used in LTE is eNB (or eNodeB), while the currently used terminology for 5G NR is gNB. The term *"base station"* or *"radio base station"* here refers to a physical entity within a communication network. As with the mobile station, the base station may have several functional entities. A functional entity refers to a software or hardware module that implements and/or offers a predetermined set of functions to other functional entities of the same or another node or the network. The physical entity performs some control tasks with respect to the communication device, including one or more of scheduling and configuration. It is noted that the base station functionality and the communication device functionality may be also integrated within a single device. For instance, a mobile terminal may implement also functionality of a base station for other terminals. The terminology used in LTE is eNB (or eNodeB), while the currently used terminology for 5G NR is gNB. In particular, the base station may also be gNB in a Non-Terrestrial Network (NTN) NR system.

New radio operates in different frequency bands. For example, FR1 is a bandwidth (frequency range) below 7.125 GHz and FR2 is a bandwidth above 24.250 GHz for the 5G New Radio.

*Simultaneous multi-panel transmission*

In Rel-15/16/17, MIMO features were investigated and specified for both FDD and TDD systems, of which major parts were designated for downlink (DL) MIMO operation. In Rel-18, it is desired to identify and specify necessary enhancements for uplink (UL) MIMO, while necessary enhancements on downlink MIMO that facilitate the use of large antenna array would still to be desirable. This comprises further improving UL precoding indication and UL beam indication to facilitate simultaneous multi-panel (STxMP) UL transmission_for higher UL throughput/reliability, focusing on FR2 and multi-TRP assuming up to 2 TRPs (Transmission and Reception Points) and up to 2 panels.

For example, as advanced UEs (e.g. customer premises equipment (CPE), fixed wireless access (FWA), vehicle, industrial devices or the like) become more relevant, introducing necessary enhancements to support for 8 antenna ports as well as 4 and more layers for UL transmission can offer the needed improvement for UL coverage and average throughput. With the introduction of features for UL panel selection in Rel-17, advanced UEs (e.g. CPE, FWA, vehicle, industrial devices) can benefit from higher UL coverage and average throughput with simultaneous UL multi-panel transmission.

When referring to "simultaneous transmission", the simultaneous transmissions can, in general, be partially or fully overlapping in time-domain. The simultaneous transmissions can be scheduled with one or multiple scheduling DCIs.

The improvement studies include further UL precoding indication for PUSCH, where no new codebook is introduced for multi-panel simultaneous transmission. The total number of layers is up to four across all panels and total number of codewords is up to two across all panels, considering single DCI and multi-DCI based multi-TRP operation.

Another improvement includes UL beam indication for PUCCH/PUSCH, where a unified TCI (transmission configuration index) framework extension is assumed, considering single DCI and multi-DCI based multi-TRP operation. TCI is transmission configuration index. A TCI state defines parameters for configuring a quasi co-location (QCL) relationship between a source reference signal (RS) and the target channel or target signal. Accordingly, by measuring the source RS, the UE can set the reception coefficients (e.g. a spatial filter) and/or tune the reception antenna for the reception of the target channel/signal . A TCI state resembles a spatial filter used for transmission and reception to/from a transmission point or TRP. For the case of multi-DCI based multi-TRP operation, only PUSCH+PUSCH, or PUCCH+PUCCH is transmitted across two panels in a same CC (component carrier).

In release 18, it was agreed to support the following Uplink STxMP transmissions:

-    Single-DCI SDM-based STxMP PUSCH
-    Single-DCI SFN-based STxMP PUSCH
-    Single-DCI SFN-based STxMP PUCCH
-    Multi-DCI STxMP PUSCH

Fig. 6 illustrates the Single-DCI SDM-based STxMP PUSCH and the Single-DCI SFN-based STxMP PUSCH. SDM denotes Spatial Division multiplexing. SFN denotes here Single Frequency Network. In SFN, a UE sends multiple copies of the same transmission to different TRPs, all fully overlapped. For instance, currently in in release 18, single DCI STxMP schemes: SDM PUSCH, SFN PUSCH, SFN PUCCH all fully overlap in time domain. A single DCI is received at a UE from a first TRP (TRP1) scheduling an UL transmission (UL PUSCH - physical uplink shared channel) from the two UE panels 610 and 620 to the respective first TRP and a second TRP (TRP2). The panel (610, 620) is a two-dimensional array (matrix) of antenna elements. In this non limiting schematic example, each element has a different polarization.

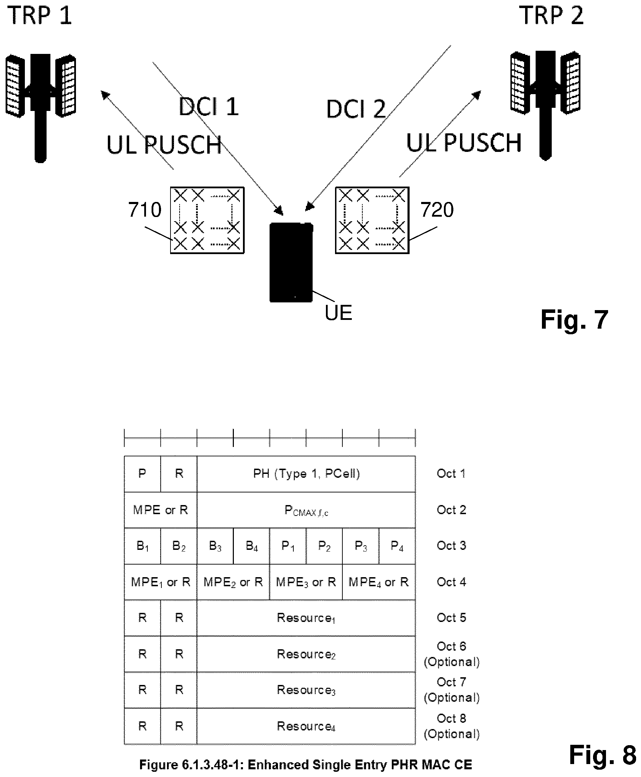

Fig. 7 illustrates the Multi-DCI STxMP PUSCH. A gNB sends a first DCI (DCI1) through a first transmission point, here TRP1, to the UE. The gNB sends a second DCI (DCI2) through a second transmission point, here TRP2, to the UE. The UE then transmits the UL PUSCH from the first panel 710 to the gNB through TRP1 in response to the DCI1 and from the second panel 720 to the gNB through TRP2 in response to the DCI2. The panels 710 and 720 have similar features as described above for panels 610 and 620. A multi-DCI PUSCH scheme can have fully or partially overlapping time domain transmission.

*Power headroom reporting*

In release 17, several enhanced power headroom reporting (PHR) MAC-CEs (cf. 3GPP TS 38.321, Section 6.1.3.48-51) were introduced. CE stands for control element and it is a syntax element of the MAC protocol. A power headroom (more specifically a type 1 power headroom level) or a power availability is a measure of difference between maximum per carrier of a transmit power ($P_{cmax,f,c}$) and the scheduled PUSCH transmit power (not the actual PUSCH power. $P_{cmax,f,c}(i)$ is the maximum output power configured by a UE and defined, for example, in Section 8-1 of 3GPP TS 38.101-1, Section 8-2 of 3GPP TS 38.101-2 and Section 8-3 of 3GPP TS 38.101-3 for a carrier f of a serving cell c in PUSCH transmission occasion i.

In the following, two CEs are exemplified. In particular, 3GPP TS 38.321 in Section 6.1.3.48 is illustrated in Fig. 8 and shows the Enhanced Single Entry PHR MAC CE, which allows UE to report the following:

- power headroom type-1 for PUSCH.

- The applied power backoff (P-MPR) to meet maximum permissible exposure (MPE) requirement.

- Indices of up to 4 beams from an RRC configured MPE reporting beam pool.

- The applied power backoff to meet maximum permissible exposure (MPE) requirements for the reported beams above.

In particular, in Fig. 8, each row illustrates an octet (8 bits) - the position of bits of the octet are schematically indicated by the vertical lines on the top of the first row. Fig. 8 shows fields of the Enhanced Single Entry PHR MAC CE. $B_i$ field indicates whether the candidate beam information identified by Resource$_i$ is present or not. If the $B_1$ field is set to 1, the first octet containing Resource, is present, and if the $B_2$ field is set to 1, the second octet containing Resource$_2$ is present, and so on. Regarding $P_i$, if *mpe-Reporting-FR2-r17* element of RRC is configured and the Serving Cell operates on FR2, the MAC entity shall set this field to 0 if the applied P-MPR value is less than P-MPR_00 and to 1 otherwise. P-MPR is a power management maximum power reduction. In release 17, this field indicates an index to Table 6.1.3.8-3 (in the 3GPP TS 38.321) and the corresponding measured values of P-MPR levels in dB are specified in 3GPP TS 38.133. MPE$_i$ setting is performed as follows: if *mpe-Reporting-FR2-r17* is configured, and the Serving Cell operates on FR2, and if the corresponding P$_i$ field is set to 1, this field indicates the applied power backoff. The length of the field is 2 bits. If *mpe-Reporting-FR2-r17* is not configured, or if the Serving Cell operates on FR1, or if the P$_i$ field is set to 0, R bits are present instead. Resource$_i$ field indicates the candidate beam identified by the number of entries in the corresponding *mpe-ResourcePoolToAddModList* specified by the RRC protocol. The length of this field 6 bits.

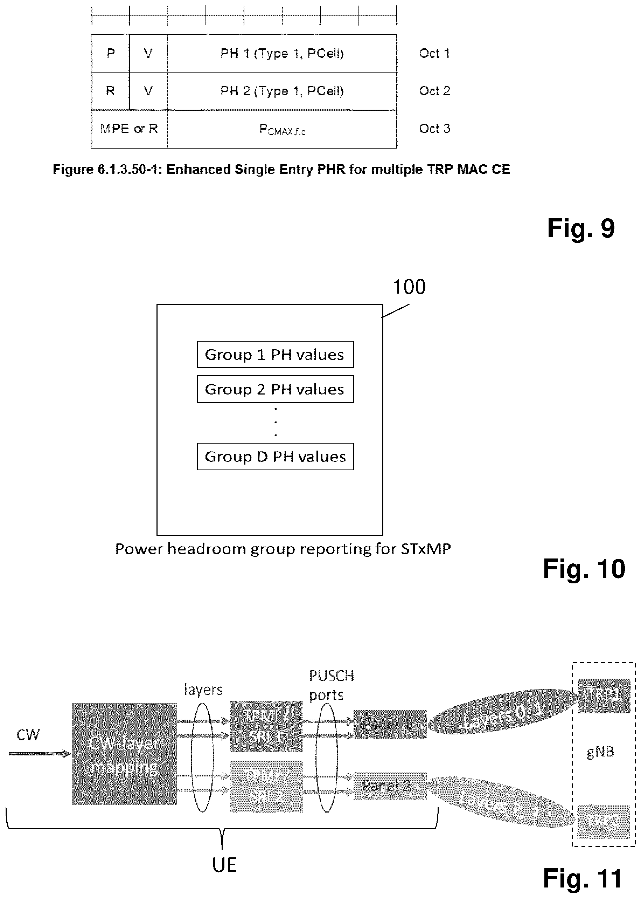

On the other hand, 3GPP TS 38.321 in Section 6.1.3.50 shows an Enhanced Single Entry PHR MAC CE for multiple TRP and is illustrated in Fig. 9.

This Enhanced Single Entry PHR MAC CE for multiple TRP allows UE to report the following:

- PH reporting for multiTRP PUSCH repetition scheme in release 17.

- Two power headroom type-1, where PH 1 is associated with the SRS-ResourceSet with a lower srs-ResourceSetId and PH 2 is associated with the SRS-ResourceSet with a higher srs-ResourceSetId.

- Virtual PH level reporting.

In particular, Power Headroom i (PH i) field indicates the power headroom level, where PH 1 is associated with the *SRS-ResourceSet* with a lower *srs-ResourceSetId* and PH 2 is associated with the SRS-ResourceSet with a higher *srs-ResourceSetId.* PH fields for a Serving Cell are included in ascending order based on i. The length of the field is 6 bits. *SRS-Resource Set, and srs-ResourceSetId* are RRC information elements that specify sounding reference signal (SRS) resource sets.

The V field indicates if the PH value for the corresponding TRP is based on a real transmission or a reference format. For Type 1 PH, the V field set to 0 indicates real transmission on PUSCH and the V field set to 1 indicates that a PUSCH reference format is used.

*Issues with current PHR*

For single-TRP PRACH/PUCCH/PUSCH/SRS uplink transmission schemes and for multi-TRP PUSCH/-PUCCH uplink repetition schemes, the UE is transmitting in one uplink spatial direction per transmission occasion. The transmission occasion is specified in 3GPP TS 38.213 in section 7. A PUSCH/PUCCH/SRS/PRACH transmission occasion *i* is defined by a slot index $n_{s,f}^{\mu}$ within a frame with a system frame number *SFN,* a first symbol *S* within the slot, and a number of consecutive symbols *L.*

For a non-simultaneous uplink transmission, the power backoff needed to meet MPE requirements for a transmission occasion in one uplink spatial direction is not affected by any other transmissions in different uplink spatial directions.

On the other hand, for simultaneous multi-panel (STxMP) UL transmission, multiple PUCCH/PUSCH transmissions are being transmitted at the same time in multiple spatial directions. For example, release 18 approved STxMP of up to 2 TRPs and up to 2 panels (two spatial directions). For simultaneous multi-panel (STxMP) UL transmission, the UE needs to determine how to utilize PHR MAC CE to send the network a power headroom level (also power backoff value) regarding each spatial direction in the case of simultaneous multi-panel (STxMP) UL transmission. For simultaneous multi-panel (STxMP) UL transmission, for a group of uplink spatial directions on which an uplink channel can be transmitted simultaneously, the network scheduler might need to know the power headroom and power back off value per spatial direction.

Moreover, for simultaneous multi-panel (STxMP) UL transmission, the UE needs to satisfy certain power constraints (for example regulatory constraints, permissible exposure, max EIRP) jointly while simultaneously transmitting in multiple spatial directions. Therefore, the power backoff needed to meet MPE requirements for a transmission in one uplink spatial direction is affected by the simultaneous transmissions taking place on the other uplink spatial directions. For example, given the UE power and regulatory constraints, the power backoff value needed in direction 1 when the UE transmits PUSCH simultaneously on spatial directions 1 and 2, may be different from the power backoff value needed in direction 1, when instead the UE transmits PUSCH simultaneously on spatial directions 1 and 3.

Therefore, the reported power headroom level values (also power backoff value) for the above group of spatial directions are dependent on one another. For UE for which any combination of uplink spatial directions does not exceed power and regulatory constraints, it could also be possible that the reported power headroom level (also power backoff value) for the group of uplink spatial directions that can be transmitted simultaneously, are independent.

In order to be able to interpret the reports correctly, the network (e.g. gNB) may need to be aware of such UEs (UEs possessing the capability of joint reporting per group of spatial directions).

*Power headroom reporting for STxMP per group of spatial directions*

According to an aspect of the present disclosure, for simultaneous multi-panel (STxMP) UL transmission, power headroom reporting by the UE can be calculated jointly per group for each of $D \geq 0$ groups (D being an integer) of UL spatial directions contained in one PH report. One group of UL spatial directions consists of a number (one or more) of beams on which an uplink channel/signal (e.g. PUSCH or PUCCH or the like) can be transmitted simultaneously. For example, for D=0, there is a power headroom level reporting, but no MPE reporting.

For a UE, for which any combination of uplink spatial directions does not exceed power and regulatory constraints, power headroom reporting by the UE can also be calculated independently for a group of uplink spatial directions. It may be further desirable to provide a method for network to be aware of such UE.

It may be advantageous to send the power headroom reporting of the different groups of UL spatial directions dynamically via MAC-CE transmission. This approach has been currently also adopted for 5G/NR and may be applied to both types of reporting, the reporting per group of spatial directions (beams) as well as reporting per individual spatial direction (beam).

Such reporting captures power reduction needed per spatial direction when two or more UL spatial directions are used simultaneously for STxMP transmission, in order to meet power constraints and MPE requirements imposed on the UE. When power reduction levels are reported jointly for the beams in the group, the network scheduler can take into account the needed power reduction in each spatial direction when determining the beams that are compatible to transmit on simultaneously along with other scheduling parameters. Reporting several groups together can give the network some options to determine what group of beams are more suitable for STxMP. It also offers complexity reduction when beam grouping is not necessary.

The group reporting is illustrated in Fig. 10. The group-based report 100 includes indications of Group-i PH values (i being an integer from 1 to D). A group is a group of spatial directions. One report can include all defined groups or a subset of the defined groups.

Fig. 11 is a schematic illustration of a legacy simultaneous SDM based multi-panel (STxMP) UL transmission for which the herein described aspects and embodiments are applicable, but not limited to. For SDM scheme of a single-DCI based STxMP PUSCH, two SRS resource sets for CB/NCB transmission are configured. Moreover, for a codebook-based (CB) PUSCH, DCI indicates two TPMI fields, and each TPMI field separately indicates the precoding information and the number of layers conveyed over the SRS ports of the indicated SRS resource in each SRS resource set. For a non-codebook based (NCB) PUSCH and codebook-based PUSCH, DCI indicates two SRS resource indicator (SRI) fields, and each field indicates SRS resource(s) for each SRS resource set separately.

To indicate DMRS ports for SDM scheme of a single-DCI based STxMP PUSCH, the DCI field "Antenna Ports" in DCI format 0_1 and 0_2 is reused where the total numbers of layers, L, indicated by two TPMI fields of CB PUSCH or two SRI fields of NCB PUSCH is used to determine the DMRS port indication table. L1 of the indicated DMRS ports are associated with the L1 PUSCH layers which are indicated by the first TPMI field for CB PUSCH or the first SRI field for NCB PUSCH and the rest L- L1 of the indicated DMRS ports are associated with the L-L1 PUSCH layers which are indicated by the second TPMI field for CB PUSCH or the second SRI field for the NCB PUSCH. In particular: (i) The first L1 indicated DMRS ports correspond to the L1 layers indicated by the first TPMI or SRI field; and The remaining L2 indicated DMRS ports correspond to the L2 layers indicated by the second TMPI or SRI field. The DMRS ports associated with two TPMI/SRI fields can be in same or different CDM groups. Moreover, for indicating DMRS ports in different CDM groups for layer combination {1+2} in SDM, a new entry {0, 2, 3} is added to the DMRS table. This is an optional UE capability for UE that supports sDCI based STxMP SDM.

The codepoints of "SRS resource set indicator" in DCI for dynamic switching between STxMP SDM and sTRP transmission are interpreted and the SRI/TPMI fields are designed as follows. The codepoints 00 and 01 indicate sTRP transmission. 00 indicates the first SRS resource set and 01 indicates the second SRS resource set. The codepoints 10 indicate SDM transmission with the first and second SRS resource set. The first SRI field and first TPMI field are associated with the first SRS resource set and they indicate the precoder(s)/rank/SRI for the first SRS resource set. The second SRI field and second TPMI field are associated with the first SRS resource set and they indicate the precoder(s)/rank/SRI for the second SRS resource set.

According to the aspects and embodiments of the present disclosure, there may be various ways in which the PH reporting is performed for simultaneous multi-panel transmission. For example, the MAC-CE transmission may include or combine one or more of the following three features:

- Feature 1: Grouping of UL Spatial Directions
- Feature 2: Power Headroom Level reporting
- Feature 3: Power reduction (P-MPR) reporting

These features will be described below in more detail.

*FEATURE 1: Grouping of UL Spatial Directions*

The UE is RRC configured with an indexed pool of reference signals representing a pool of beams or TCI states, on which to perform MPE measurements. The beams are spatially pointing towards multiple TRPs. This pool is hereinafter referred to as *mpe_multiTRP_pool*. The term "*mpe_multiTRP_pool*" may correspond to an information element (IE) of the RRC protocol that configures the pool.

For example, an RRC configuration within a PUSCH-Configuration element may look as follows:

```
mpe-ResourcePoolToAddModList-r17        SEQUENCE (SIZE(1..maxMPE-Resources-
r17)) OF MPE-Resource-r17   OPTIONAL,  -- Need N
    mpe-ResourcePoolToReleaseList-r17       SEQUENCE (SIZE(1..maxMPE-
Resources-r17)) OF MPE-ResourceId-r17  OPTIONAL   -- Need N


MPE-Resource-r17 ::=        SEQUENCE {
    mpe-ResourceId-r17      MPE-ResourceId-r17,
    cell-r17                ServCellIndex           OPTIONAL,    -- Need R
    additionalPCI-r17       AdditionalPCIIndex-r17  OPTIONAL,    -- Need R
    mpe-ReferenceSignal-r17     CHOICE {
        csi-RS-Resource-r17         NZP-CSI-RS-ResourceId,
        ssb-Resource-r17            SSB-Index
    }
}


MPE-ResourceId-r17 ::=      INTEGER (1..maxMPE-Resources-r17)
```

*mpe-ResourcePoolToAddModList*

List of Synchronization Signal Block (SSB)/Channel State Information Reference Signal (CSI-RS) resources for P-MPR reporting. Each resource is configured with serving cell index where the resource is configured for the UE. The *additionalPCI* is configured only if the resource is SSB. For each resource, if neither *cell* nor *additionalPCI* is present, the SSB/CSI-RS resource is from the serving cell where the *PUSCH-Config* is configured.

There are several options of how to facilitate the grouping of spatial directions in FEATURE 1.

**Option 1-1:** Any group of UL spatial directions consists of a list of indices of reference signals in the RRC configured pool *mpe_multiTRP_pool.* The UE can determine the group of spatial directions to include in a group based on DL reference signal measurements.

For instance, each of the plurality of groups of (UL) spatial directions corresponds to a list of indices of spatial directions. As mentioned, the spatial directions may be represented e.g. by beams or TCI states on which MPE measurements are to be performed.

**Option 1-2:** A group of UL spatial directions is a single index in an interim table dynamically activated, where each entry in the interim table consists of a number of indices in *mpe_multiTRP_pool.*

For instance, each of the plurality of groups of spatial directions corresponds to a single index referring to an interim table mapping the index (i.e. the single respective index corresponding to a given spatial direction) to the spatial directions within the group.

The interim table can be activated by gNodeB, and the gNB informs the UE about it dynamically with MAC-CE, or the UE can activate a table of groups of spatial directions and inform the gNodeB about the table. One of the advantages of this option is that it saves on indexing bits for every reference signal. On the other hand, if the gNodeB activates the interim table via MAC-CE for example, it will cause extra overhead.

**Option 1-3:** No grouping of UL spatial directions.

However, the present disclosure is not limited to grouping the UL spatial directions (e.g. beams or TCI states) into beams. For instance, the plurality of spatial directions is (directly) indexed, without being grouped or indexed using a (single) group index or an interim table mentioned above.

For instance, the UE or gNB transmits a signal whether the UL spatial directions are grouped or whether no grouping is applied. As will be described further, the signal may include RRC signaling such as a configuration or a capability report, or a control element (e.g. a MAC control element) including a toggle bit.

*FEATURE 2: Power Headroom Level reporting*

Feature 2 relates to the way of the power headroom level reporting. For simultaneous multi-panel (STxMP) UL transmission, the UE transmits in $J$ spatial directions simultaneously (J being an integer greater than or equal to 2). For example, UE transmits $J$ transmissions of the same PUSCH message in an SFN-fashion from $J$ panels simultaneously. For example, in release 18, J = 2. The UE reports $J$ power headroom levels ($PH_j$; j = 1,...,J) for each of the simultaneous transmissions. The value of $PH_j$ can be based on a real transmission or a reference format, indicated by $V_j \in \{0,1\}$ where the value 0 indicates a real transmission and 1 indicates a reference format. In some exemplary implementations, the UE also reports whether power reduction was applied for each of the J transmissions ($P_j \in \{0,1\}$) along with the value of the power backoff ($MPE_j$: c bits, for example c = 2).

For instance, the UE transmits a power headroom report (PHR) including, for each one of J simultaneous transmissions, a power headroom level indication indicating the power headroom level $PH_j(j = 1,...,J)$.

For instance, the power headroom report may include a bit, which may be called a "format bit" (e.g. said $V_j \in \{0,1\}$), indicating whether the power headroom level is determined based on a measurement or on a reference format.

The power headroom report may for instance include a reduction application indication. The reduction application indication may include an indication (e.g. said $P_j \in \{0,1\}$) whether power reduction is applied (above), and, if power reduction is applied, a value of the applied power reduction (e.g. $MPE_j$).

There may be various ways to calculate PH. In the following, two options are exemplified for the $PH_j$ calculation:
**Option 2-1:** One configured maximum output power $P_{CMAX,f,c}$ is reported and is used in the calculation of the J power headroom levels. For example, in 3GPP TS 38.213, $P_{CMAX,f,c}(i)$ is the UE-configured maximum output power mentioned above for a carrier $f$ of a serving cell c in a PUSCH transmission occasion $i$.

Following Option 2-1, maximum UE transmit power may be used as a "common" power maximum, common to a plurality of simultaneous transmissions. For instance, the UE determines the power headroom levels for all of the plurality of simultaneous transmissions based on a common power maximum, and the power headroom report includes the common power maximum.

This option may facilitate keeping the overhead low. This option is also useful when the UE panels that are transmitting simultaneously have similar power amplification and radiation characteristics, and therefore a common configured output power suffices for operation.

**Option 2-2:** $P_{lim,j} = f_j(P_{CMAX,f,c})$ power limit as a function of the UE configured maximum output power is reported for each transmission j = 1,...,J and is used in the determination of $PH_j$; j = 1,...,J.

Here, for each of the plurality of simultaneous transmissions j = 1,...,J, the UE uses a respective power maximum (or a respective maximum UE transmit power), indicated $P_{lim,j}$, and the power headroom report may include each of the respective power maxima $P_{lim,j}$. As shown above, $P_{lim,j} = f_j(P_{CMAX,f,c})$ may be a function of the maximum UE transmit power $P_{CMAX,f,c}$.

On one hand, this option requires more overhead. On the other hand, this option provides a technical advantage where the UE is able to discretely provide individual reports for each panel when the panels might have different maximum power constraints when calculating uplink power.

*FEATURE 3: Feature 3: Power reduction (P-MPR) reporting*

Feature 3 is concerned with the way the power reduction is reported. Two possible options are exemplified below.

**Option 3-1:** The UE reports power reduction values for D candidate groups of UL spatial directions per report, with each candidate group consisting of J uplink beams that can be used for simultaneousness uplink transmission. The number of groups D can be indicated by a bit field inside the report to indicate how many groups are reported. For each group d (d $\in$ {1,... D}), for each uplink spatial direction j $\in$ {1,... J}), in that group, the UE reports whether a power reduction is needed to meet MPE requirements ($P_{d,j} \in \{0,1\}$), and the value of the power reduction needed in that direction $MPE_{d,j}$. One of the advantages of this approach is that when power reduction levels are reported jointly for the beams in the group, the network scheduler can take into account the needed power reduction in each spatial direction when determining the beams that are compatible to transmit on simultaneously along with other scheduling parameters. This is referred to herein as group-based power headroom reporting.

For instance, a UE generates and transmits a power headroom report including, for each of one or more groups of a plurality of spatial directions, a power reduction requirement indication.

**Option 3-2:** The UE reports power reduction values for D' UL spatial directions per report, chosen from *mpe_multiTRP_pool*. For each uplink spatial direction j $\in$ {1,... D'}), the UE reports whether a power reduction is needed to meet MPE requirements ($P'_j \in \{0,1\}$), and the value of the power reduction needed in that direction $MPE'_j$. One of the advantages of this option is that it reduces complexity when beam grouping is not needed. This is referred to hereinafter as individual beam-based reporting.

For instance, the UE generates and transmits a power headroom report including, for each of one or more spatial directions, a power reduction requirement indication.

In accordance with Feature 3, a power reduction requirement indication may include an indication whether power reduction is required (e.g. $P_{d,j} \in \{0,1\}$ or ($P'_j \in \{0,1\}$ shown above) and, if power reduction is required, an index of the group or spatial direction, and a value of the power reduction required. In case the power reduction requirement is indicated for groups of spatial directions (e.g. Option 3-1), an indication may be provided, respectively for each group, for each one of the plurality of simultaneous transmissions (as indicated by index j in power reduction requirement $MPE_{d,j}$).

*Exemplary detailed embodiments*

The above mentioned features and their options may be combined. Some of such combinations will be described in the following.

EMBODIMENT 1

According to this embodiment, the UE can (dynamically) choose to report either group-based power headroom or individual beam-based power headroom by using a toggle bit $T \in \{0,1\}$ to indicate whether PH reporting is per group ($T = 1$) or based on individual spatial directions ($T = 0$).

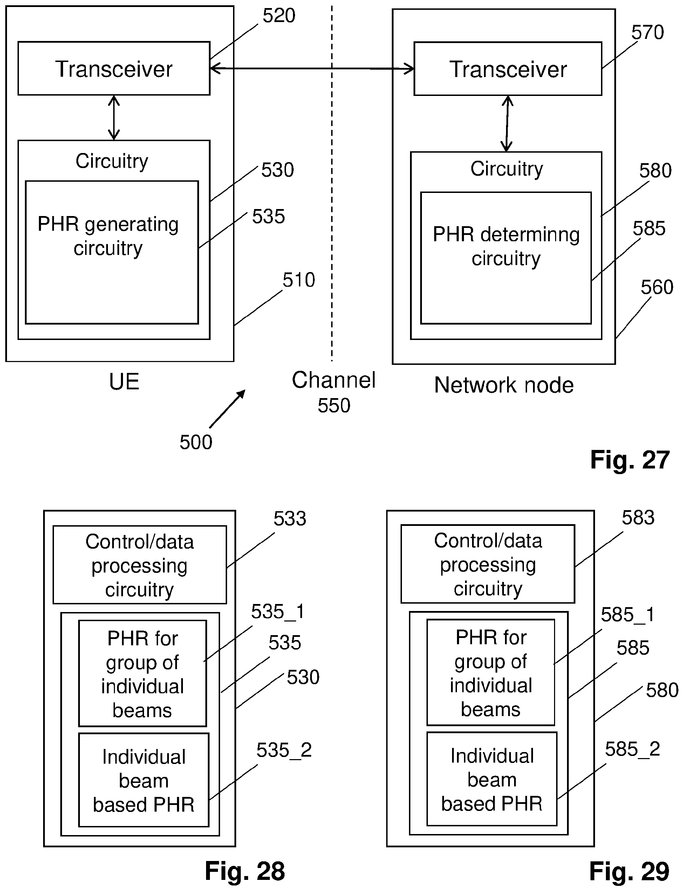

An exemplary UE is shown in Fig. 27, including a transceiver 520 and a circuitry 530, which are described in more detail further below. A communication apparatus 510 according to this embodiment may include circuitry 530 which, in operation, determines whether to indicate a power reduction requirement for each of a plurality of spatial directions or for each of one or more groups of the plurality of spatial directions, and, based on the result of the determination, generates a power headroom report including, for each of the plurality of spatial directions or for each of the one or more groups of the plurality of spatial directions, a power reduction requirement indication, and a transceiver 520 which, in operation, transmits the power headroom report.

The power headroom report may include a toggle bit indicating whether the power reduction requirement is indicated for each of the plurality of spatial directions or for each of the plurality of groups of the plurality of spatial directions.

Advantageously, this embodiment allows for the UE to dynamically indicate to the gNB whether the power headroom report is group-based or individual beam-based, thus allowing the UE to flexibly determine whether to inform the network of the power reduction levels on a group level for the network to take into account the needed power reduction in each spatial direction when the beams that are compatible to transmit simultaneously are grouped together, or on individual beam levels to reduce complexity when beam grouping is not needed.

In a first **sub-embodiment 1-1** of Embodiment 1, Option 1-1 of Feature 1 and Option 2-1 of Feature 2 are combined. Both options (3-1, 3-2) of Feature 3 are applicable. Accordingly, a group of UL spatial directions may consist of a list of indices of reference signals ($RS\_Index_{dj}$) in the RRC configured pool *mpe_multiTRP_pool.* One $P_{CMAX,f,c}$ is reported to be used in the calculation of the J power headroom levels.

For instance, each of the plurality of groups of (UL) spatial directions may correspond to a list of indices of spatial directions (e.g. beams or TCI states as described above), and the circuitry 530, in operation, determines the power headroom levels for all of the plurality of simultaneous transmissions based on a common power maximum, and the power headroom report includes the common power maximum.

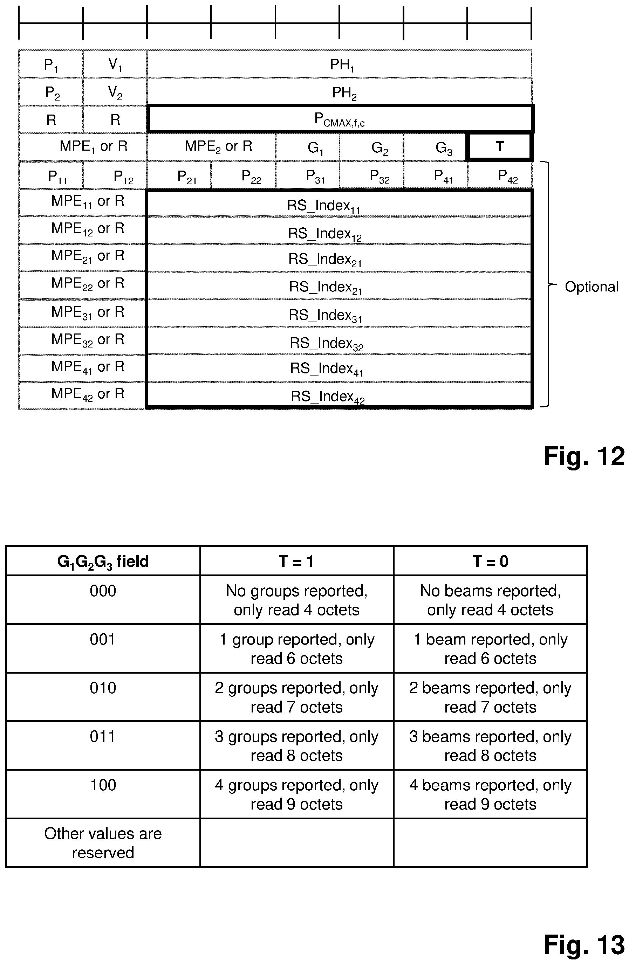

Fig. 12 illustrates an exemplary power headroom report (PHR) that includes the toggle bit T. The present embodiment is not limited to any particular position of the toggle bit T. Fig. 12 exemplified T to be included as a last bit in the fourth octet. The remaining fields of the PHR have similar meaning as described above with reference to Figs. 8 and 9. In this example, $J = 2$; $0 \le D \le 4$. $T \in \{0,1\}$ indicates whether PH reporting is per group (in case $T = 1$) or based on individual spatial directions (in case $T = 0$). It is noted that this semantics is only exemplary. In general, $T = 0$ may signal reporting per group and $T = 1$ may signal reporting for individual directions.

$PH_j$ indicates the power headroom level.

$P_{CMAX,f,c}$ indicates a configured maximum UE output power. In legacy,(if present) the $P_{CMAX,f,c}$ (as specified in 3GPP TS 38.213) for the NR Serving Cell and the $P_{CMAX,c}$ or $\tilde{P}_{CMAX,c}$ (as specified in 3GPP TS 36.213) for the E-UTRA Serving Cell used for calculation of the preceding PH field.

$MPE_{d,j}$ indicates (in legacy systems and also in the present disclosure) if the corresponding $P_i$ field is set to 1, the applied power backoff to meet MPE requirements. The length of the field is 2 bits In Legacy, it is specified in 3GPP TS 38.101-2. This field indicates an index to the Table 6.1.3.8-3 and the corresponding measured values of P-MPR levels in dB are specified in TS 38.133. Table 6.1.3.8-3 is illustrated below as a possible but non limiting example.

**Table 6.1.3.8-3: Effective power reduction for MPE P-MPR**

| MPE | Measured P-MPR value |
|---|---|
| 0 | P-MPR 00 |
| 1 | P-MPR 01 |
| 2 | P-MPR 02 |
| 3 | P-MPR 03 |

$P_d$ and $P_{dj} \in \{0,1\}$: indicates whether power backoff is applied. In the present example, one value of $P_d$ and $P_{dj}$ indicates that power backoff is applied whereas another value indicates that power backoff is not applied. Here, the index $d \in \{1,... D\}$ s an index through the groups and index $j \in \{1,... J\}$ is an index through the spatial directions. When a group is not reported, corresponding $P_{d,j}$ is reserved.

$V_d \in \{0,1\}$: indicates whether PH level is based on real transmission or a reference format.

$RS\_Index_{dj}$ is the index of the reference signal within the *mpe_multiTRP_pool* list.

In case T = 0, for example, bits related to j =2 for every group (for example $P_{12}$, $MPE_{12}$ and $RS\_index_{12}$ are reserved (thus skipping the second beam bit field of every group). If a P field is zero, then MPE field is reserved, otherwise P-MPR value is reported therein.

The 3-bit field $G_1G_2G_3$ indicates the number of candidate groups or spatial directions reported, here shown $0 \leq D \leq 4$. When $G_1G_2G_3$ is 000, no P-MPR for candidate beams are reported (irrespectively of the value of T). The remaining exemplary semantics of the field combination $G_1G_2G_3$ is illustrated in Fig. 13 for the respective values of T = 0 and T = 1.

In other words, the power headroom report may include a bit field indicating a number of the plurality of spatial directions (if power reduction requirement indication is beam based, e.g. T=0) or a number of the plurality of groups of spatial directions (e.g. if power reduction requirement indication is group based, e.g. T=1).

In a first **sub-embodiment 1-2** of Embodiment 1, Option 1-1 of Feature 1 and Option 2-2 of Feature 2 are combined. Both options (3-1, 3-2) of Feature 3 are applicable. Accordingly, a group of UL spatial directions consists of a list of indices of reference signals ($RS\_Index_{dj}$) in the RRC configured pool *mpe_multiTRP_pool*. $P_{lim,j} = f_j(P_{CMAX,f,c})$ power limit used in the calculation of $PH_j$; j = 1,...,J s reported for each transmission (spatial direction) j = 1,...,J

For instance, each of the plurality of groups of spatial directions may correspond to a list of indices of the plurality of spatial directions, and the circuitry 530, in operation, determines, for each of the plurality of simultaneous transmissions, the power headroom level based on a respective power maximum, and the power headroom report includes each of the respective power maxima.

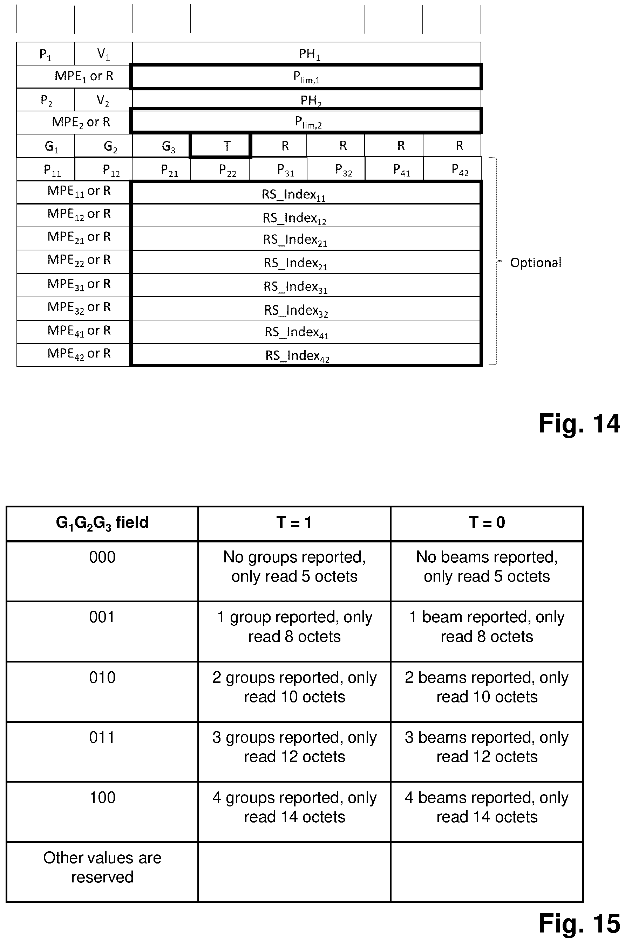

Fig. 14 illustrates an exemplary PHR compliant with embodiment 1-2. Depicted here is the PHR for J = 2; $0 \leq D \leq 4$. $T \in \{0,1\}$ indicates whether PH reporting is per group (T = 1) or based on individual spatial directions (T = 0). When T = 0, bits related to j =2 for every group (for example $P_{12}$, $MPE_{12}$ and $RS\_index_{12}$ are reserved (skip the second beam bit field of every group). If a P field is zero, then the corresponding MPE field is reserved, otherwise P-MPR value is reported. The 3-bit field $G_1G_2G_3$, indicates the number of candidate groups reported, here shown $0 \leq D \leq 4$. When $G_1G_2G_3$ is 000, no P-MPR for candidate beams are reported. When a group is not reported, corresponding $P_{d,j}$ is reserved. The semantic for the field combination $G_1G_2G_3$ is shown in Fig. 15 by way of an example.

In a first **sub-embodiment 1-3** of Embodiment 1, Option 1-2 of Feature 1 and Option 2-1 of Feature 2 are combined. Both options (3-1, 3-2) of Feature 3 are applicable. Accordingly, a group of UL spatial directions is a single index ($Group\_Index_d$) in an interim table dynamically activated, where each entry in the interim table consists of a number of indices in *mpe_multiTRP_pool*. For example, the network can determine the N groups of spatial directions (N entries in the table) in this interim table, and signal this table to the UE via dynamic signaling (e.g. on MAC level, within a MAC-CE). Therefore $Group\_Index_d$ may consist of $\log_2(N)$ bits. The network can change the groups of spatial directions in the interim table and activate a new table by sending the UE another MAC-CE with the new table information. Similarly, the UE can determine the N groups of spatial directions (N entries in the table) in this interim table, and signal this table to the network via dynamic signaling (e.g. MAC-CE).

One $P_{CMAX,f,c}$ is reported to be used in the calculation of the J power headroom levels.

For instance, each of the plurality of groups of spatial directions corresponds to a single index referring to an interim table mapping the index to the spatial directions within the group, and the circuitry 530, in operation, determines the power headroom levels for all of the plurality of simultaneous transmissions based on a common power maximum, and the power headroom report includes the common power maximum.

If P field is zero, then MPE field is reserved, otherwise P-MPR value is reported. The 3-bit field $G_1G_2G_3$, indicates the number of candidate groups reported, here shown $0 \leq D \leq 4$. When $G_1G_2G_3$ is 000, no P-MPR for candidate beams are reported. When a group is not reported, corresponding $P_{d,j}$ is reserved. $T \in \{0,1\}$ indicates whether PH reporting is per group (T = 1) or based on individual spatial directions (T = 0). When T = 1, a $Group\_Index_i$ indicates the beam group index inside the interim table of beam groups activated based on *mpe_multiTRP_pool*.

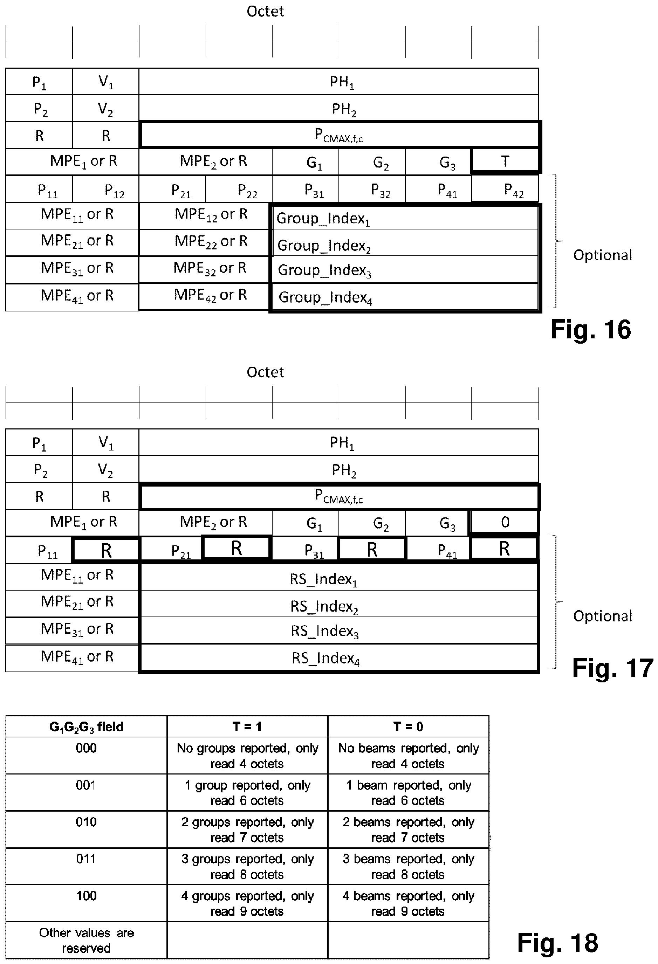

Fig. 16 shows such exemplary PHR including the $P_{CMAX,f,c}$ field as well as the $Group\_Index_i$ fields for i=1..4. This corresponds to the PHR format when T = 1.

When T = 0, bits $P_{i2}$ related to j =2 (i = 1,..,D) for every group are reserved. $MPE_{i2}$ and $Group\_index_i$ are combined to form one 6 bit indexing field for the RS in *mpe_multiTRP_pool*, corresponding to $RS\_index_i$. Fig. 17 shows the corresponding exemplary PHR which includes zero on the bit position corresponding to T (= 1) in Fig. 16 and shows the four $RS\_index_i$ fields for i=1..4. Same as in Fig. 16, the PHR includes the $P_{CMAX,f,c}$ field.

Fig. 18 shows the semantics of the 3-bit field $G_1G_2G_3$ (which can be generally also seen as a combination of three bit-fields) for T = 1 (Fig. 16) and T = 0 (Fig. 17).

In a first **sub-embodiment 1-4** of Embodiment 1, Option 1-2 of Feature 1 and Option 2-2 of Feature 2 are combined. Both options (3-1, 3-2) of Feature 3 are applicable. Accordingly, a group of UL spatial directions is a single index ($Group\_Index_d$) in an interim table dynamically activated, where each entry in the interim table consists of a number of indices in *mpe_multiTRP_pool*. $P_{lim,j} = f_j(P_{CMAX,f,c})$ power limit is reported for each transmission (spatial direction) j = 1,...,J and is used in the determination of $PH_j$; j = 1,...,J.

For instance, each of the plurality of groups of spatial directions corresponds to a single index referring to an interim table mapping the index to the spatial directions within the group, and the circuitry, in operation, determines, for each of the plurality of simultaneous transmissions, the power headroom level based on a respective power maximum, and the power headroom report includes each of the respective power maxima.

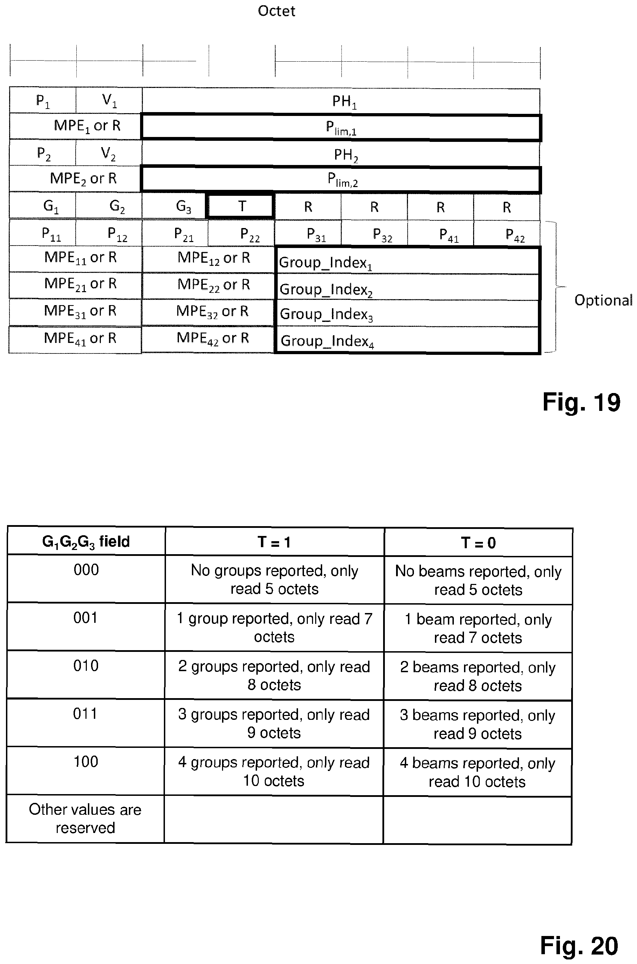

Fig. 19 shows an exemplary PHR according to this sub-embodiment. As can be seen, there are the two $P_{lim,j}$ fields (for j=1 and j=2), the toggle bit T and (if T=1) the a $Group\_Index_i$.

If a P field (meaning $P_i$ or $P_{i,j}$) is zero, then the corresponding MPE field ($MPE_i$ or $MPE_{i,j}$) is reserved, otherwise the P-MPR value is reported. The 3-bit field $G_1G_2G_3$, indicates the number of candidate groups reported, here shown $0 \leq D \leq 4$. When $G_1G_2G_3$ is 000, no P-MPR for candidate beams are reported. When a group is not reported, corresponding $P_{d,j}$ is reserved. $T \in \{0,1\}$ indicates whether PH reporting is per group (T = 1) or based on individual spatial directions (T = 0). When T = 1, the $Group\_Index_i$ is included that indicates the beam group index inside the interim table of beam groups activated based on *mpe_multiTRP_pool* (see Feature 1). When T = 0, as in the preceding sub-embodiment 1-3, bits $P_{i2}$ related to j =2 (i = 1,..,D) for every group are reserved, and $MPE_{i2}$ and $Group\_index_i$ are combined to form one 6 bit indexing field for the RS in mpe_multiTRP_pool.

Fig. 20 illustrates semantics of the 3-bit field $G_1G_2G_3$. Unlike in Fig. 18, the first 5 octets have to be always read. In Fig. 18 it is only 4 octets. This is due to the position of the G-fields and the T field resulting from signaling either one configured maximum power in embodiment 1-3 or two configured maximum power fields in embodiment 1-4.

As already noted, according to any of sub-embodiments 1-1 to 1-4, circuitry 530, in operation, determines whether to indicate a power reduction requirement for each of a plurality of spatial directions or for each of one or more groups of the plurality of spatial directions, and, based on the result of the determination, generates a power headroom report including, for each of the plurality of spatial directions or for each of the one or more groups of the plurality of spatial directions, a power reduction requirement indication.

Embodiment 1 may facilitate flexible configuration of power reduction requirement in accordance with varying transmission conditions.

EMBODIMENT 2

For simultaneous multi-panel (STxMP) UL transmission, the UE only reports group-based power headroom. In this case toggle bit T is reserved and the UE interprets the rest of PH MAC-CE fields as it did for T = 1 in sub-embodiment 1-1 to 1-4.

According to the present embodiment and sub-embodiments, provided is a communication apparatus 510, comprising circuitry 530 which in operation, generates a power headroom report including, for each of one or more groups of a plurality of spatial directions, a power reduction requirement indication, and a transceiver 520, which, in operation, transmits the power headroom report.

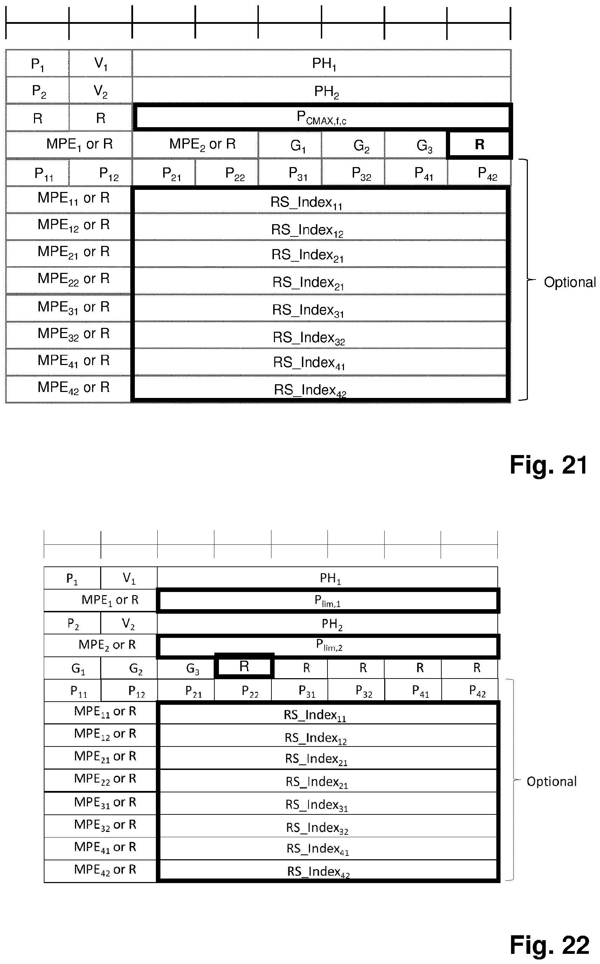

This means that the toggle bit need not be present in the PHR. Embodiment 2 has then four sub-embodiments, in which the PHR looks the same as the PHRs for T = 1 in sub-embodiments 1-1 to 1-4 described above with Option 3-1. This is illustrated in Figs. 21-24.

**Sub-embodiment 2-1** combines Option 1-1 with Option 2-1 and Option 3-1. Accordingly, a group of UL spatial directions consists of a list of indices of reference signals ($RS\_Index_{dj}$) in the RRC configured pool *mpe_multiTRP_pool*. One $P_{CMAX,f,c}$ is reported to be used in the calculation of the J power headroom levels. The UE reports power reduction values for D candidate groups of UL spatial directions per report, with each candidate group consisting of J uplink beams that can be used for simultaneousness uplink transmission. The number of groups D can be indicated by a bit field inside the report to indicate how many groups are reported. For each group d (d $\in$ {1,... D}), for each uplink spatial direction j $\in$ {1,...J}), in that group, the UE reports whether a power reduction is needed to meet MPE requirements ($P_{d,j} \in \{0,1\}$), and the value of the power reduction needed in that direction, $MPE_{d,j}$.

Fig. 21 illustrates an exemplary PHR according to sub-embodiment 2-1. As can be seen, there is a field for signaling the $P_{CMAX,f,c}$ as well as fields for signalling the list of indices of reference signals for each transmisison and group. Correspondingly, the semantics of the G-bits is same as in Fig. 13, with only the column for T = 1.

In other words, each of the plurality of groups of spatial directions corresponds to a list of indices of the plurality of spatial directions, and the circuitry 530, in operation, determines the power headroom levels for all of the plurality of simultaneous transmissions based on a common power maximum, and the power headroom report includes the common power maximum.

**Sub-embodiment 2-2** combines Option 1-1 with Option 2-2 and Option 3-1. Accordingly, a group of UL spatial directions consists of a list of indices of reference signals ($RS\_Index_{dj}$) in the RRC configured pool *mpe_multiTRP_pool*. $P_{lim,j} = f_j(P_{CMAX,f,c})$ power limit is reported for each transmission (spatial direction) j = 1,...,J and is used in the determination of $PH_j$; j = 1,...,J. The UE reports power reduction values for D candidate groups of UL spatial directions per report, with each candidate group consisting of J uplink beams that can be used for simultaneousness uplink transmission.

Fig. 22 illustrates an exemplary PHR according to sub-embodiment 2-2. Apart from absence of the toggle bit, it is similar to the PHR of embodiment 1-2. The semantics of the G-bits is same as in Fig. 15, with only the column for T = 1.

In other words, each of the plurality of groups of spatial directions corresponds to a list of indices of the plurality of spatial directions, and the circuitry 530, in operation, determines, for each of the plurality of simultaneous transmissions, the power headroom level based on a respective power maximum, and the power headroom report includes each of the respective power maxima.

**Sub-embodiment 2-3** combines Option 1-2 with Option 2-1 and Option 3-1. Accordingly, a group of UL spatial directions is a single index (Group_Index$_d$) in an interim table dynamically activated, where each entry in the interim table consists of a number of indices in *mpe_multiTRP_pool*. One $P_{CMAX,f,c}$ is reported to be used in the calculation of the J power headroom levels. The UE reports power reduction values for D candidate groups of UL spatial directions per report, with each candidate group consisting of J uplink beams that can be used for simultaneousness uplink transmission.

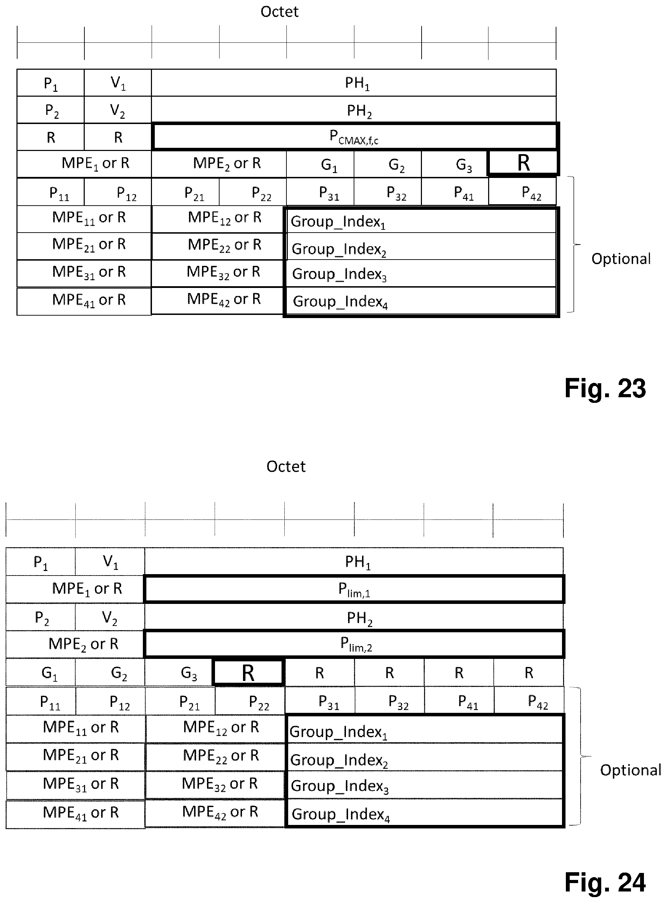

Fig. 23 illustrates an exemplary PHR according to sub-embodiment 2-3. The semantics of the G-bits is same as in Fig. 18, with only the column for T = 1. Apart from absence of the toggle bit, it is similar to the PHR of embodiment 1-3.

In other words, each of the plurality of groups of spatial directions corresponds to a single index referring to an interim table mapping the index to the spatial directions within the group, and the circuitry 530, in operation, the power headroom levels for all of the plurality of simultaneous transmissions based on a common power maximum, and the power headroom report includes the common power maximum.

**Sub-embodiment 2-4** combines Option 1-2 with Option 2-2 and Option 3-1. Accordingly, a group of UL spatial directions is a single index (Group_Index$_d$) in an interim table dynamically activated, where each entry in the interim table consists of a number of indices in *mpe_multiTRP_pool*. $P_{lim,j} = f_j(P_{CMAX,f,c})$ power limit is reported for each transmission (spatial direction) j = 1,...,J and is used in the determination of $PH_j$; j = 1,...,J. The UE reports power reduction values for D candidate groups of UL spatial directions per report, with each candidate group consisting of J uplink beams that can be used for simultaneousness uplink transmission.

Fig. 24 illustrates an exemplary PHR according to sub-embodiment 2-4. The semantics of the G-bits is same as in Fig. 20, with only the column for T = 1. Apart from absence of the toggle bit, it is similar to the PHR of embodiment 1-4.

In other words, each of the plurality of groups of spatial directions corresponds to a single index referring to an interim table mapping the index to the spatial directions within the group, and the circuitry 530, in operation, determines, for each of the plurality of simultaneous transmissions, the power headroom level based on a respective power maximum, and the power headroom report includes each of the respective power maxima.

Embodiment 2 may facilitate reducing signaling bits/overhead and UE computational effort while still enabling the gNB to know of the group-based PHR from UE, and may simplify UE operation.

EMBODIMENT 3

When UE sends a capability report indication that any combination of uplink spatial directions does not exceed power and regulatory constraints, it notifies the network that it will only report individual-beam based power headroom (Option 1-3). In other words, the UE notifies the network when (and by) sending the capability report. From the viewpoint of the network (gNB), the network interprets such UE capability report as an indication of reporting only power headroom for individual spatial directions.

The UE reports power reduction values for D' UL spatial directions chosen from the *mpe_multiTRP_pool*. For each uplink spatial direction j $\in$ {1,... D'}), the UE reports whether a power reduction is needed to meet MPE requirements ($P'_j \in \{0,1\}$), and the value of the power reduction needed in that direction $MPE'_j$. If a P field is zero, then MPE field is reserved, otherwise P-MPR value is reported (Option 3-1).

In other words, the Embodiment 3 can be seen as a combination of Option 1-3 with Option 2-2 and Option 3-2. Thus, there is no grouping of UL spatial direction. Also, $P_{lim,j} = f_j(P_{CMAX,f,c})$ power limit is reported for each transmission j = 1,...,J and is used in the determination of $PH_j$; j = 1,...,J (Option 2-2).

For instance, a communication apparatus 510 comprises circuitry 530 which, in operation, determines to indicate a power reduction requirement for each of a plurality of spatial directions, and, based on the result of the determination, generates a power headroom report including, for each of the plurality of spatial directions, a power reduction requirement indication, and a transceiver 520 which, in operation, transmits the power headroom report.

The transceiver, in operation, may send a capability report indicating that the power reduction is group independent to indicate that the power reduction requirement is indicated for each of the plurality of spatial directions.

Power reduction may be reported as being group independent by sending a capability report that indicates that any combination of uplink spatial directions does not exceed power and regulatory constraints.

The circuitry 530, in operation, may determine, for each of the plurality of simultaneous transmissions, the power headroom level based on a respective power maximum, and the power headroom report may include each of the respective power maxima.

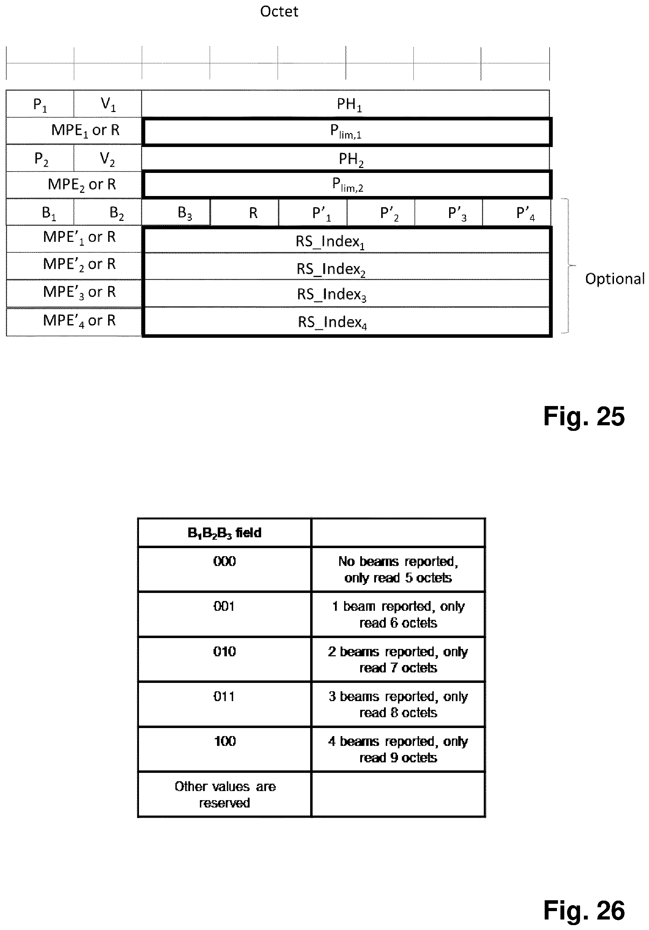

Fig. 25 shows an exemplary PHR for Embodiment 3. Depicted is the report for J = 2; $0 \leq D' \leq 4$. The 3-bit field $B_1B_2B_3$, indicates the number of candidate beams reported, here shown $0 \leq D' \leq 4$. When $B_1B_2B_3$ is 000, no P-MPR for candidate beams are reported. When a beam is not reported, corresponding $P'_j$ is reserved.

The semantics of the B-bits ($B_1B_2B_3$) is further illustrated in Fig. 26.

If the UE does not send a capability report indicating that any combination of uplink spatial directions does not exceed power and regulatory constraints, the power headroom report may include the power reduction indication for each of the plurality of groups of spatial directions. In other words, group-based indication of power reduction requirement is made unless a capability report indicates that any combination of uplink spatial directions does not exceed power and regulatory constraints. Alternatively, if the capability report does not indicate that any combination of uplink spatial directions does not exceed power and regulatory constraints, the PHR may still include a toggle bit indicating whether it has group-based or beam-based indication.

Embodiment 3 may facilitate reducing dynamic signaling overhead in the PHR since an indication whether the power reduction requirement is based on spatial directions or group based may already be provided by the capability report. Using individual beam-based reporting may reduce the operation complexity of the UE since no grouping of spatial directions would be needed.

EMBODIMENT 4

When the UE reports uplink full power transmission (ULFPTx) capability, it implies any combination of uplink spatial directions does not exceed power and regulatory constraints and the UE notifies thereby the network that it will only report beam-based power headroom.

The UE reports power reduction values for D' UL spatial directions chosen from the *mpe_multiTRP_pool.* For each uplink spatial direction $j \in \{1,... D'\}$), the UE reports whether a power reduction is needed to meet MPE requirements ($P'_j \in \{0,1\}$) , and the value of the power reduction needed in that direction $MPE'_j$. If a P field is zero, then MPE field is reserved, otherwise P-MPR value is reported. The 3-bit field $B_1B_2B_3$, indicates the number of candidate beams reported, here shown $0 \leq D' \leq 4$. When $B_1B_2B_3$ is 000, no P-MPR for candidate beams are reported. When a beam is not reported, corresponding $P'_j$ is reserved. There is no group reporting.

In other words, the Embodiment 4 can be seen as a combination of Option 1-3 with Option 2-2 and Option 3-2, similarly to Embodiment 3. The PHR report and B-bits semantics may be similar as shown for Embodiment 3 in Figs. 25 and 26, respectively.

For instance, a communication apparatus 510 comprises circuitry 530 which, in operation, determines to indicate a power reduction requirement for each of a plurality of spatial directions, and, based on the result of the determination, generates a power headroom report including, for each of the plurality of spatial directions, a power reduction requirement indication, and a transceiver 520 which, in operation, transmits the power headroom report.

The transceiver, in operation, may send a capability report indicating that the communication apparatus has uplink full power transmission capability to indicate that the power reduction requirement is indicated for each of the plurality of spatial directions.

The circuitry 530, in operation, may determine, for each of the plurality of simultaneous transmissions, the power headroom level based on a respective power maximum, and the power headroom report may include each of the respective power maxima.

If the UE does not report uplink full power transmission, the power headroom report may include the power reduction indication for each of the plurality of groups of spatial directions. In other words, group based indication of power reduction requirement is made unless uplink full power transmission is reported. Alternatively, uplink full power transmission is reported, the PHR may still include a toggle bit indicating whether it has group-based or beam-based indication.

Embodiment 4 may facilitate reducing dynamic signaling overhead in the PHR since an indication whether the power reduction requirement is based on spatial directions or group based may already be provided by the capability report. in addition, reusing uplink full power capability information may take away the need for additional information in the capability report.

EMBODIMENT 5

According to this embodiment, the UE will only report beam-based power headroom unless it notifies the network or gNB that group-based reporting is necessary to meet power and regulatory constraints and/or some combination of uplink spatial directions can exceed power and regulatory constraints.

The UE reports power reduction values for D' UL spatial directions chosen from *mpe_multiTRP_pool.* For each uplink spatial direction $j \in \{1,... D'\}$), the UE reports whether a power reduction is needed to meet MPE requirements ($P'_j \in \{0,1\}$) , and the value of the power reduction needed in that direction $MPE'_j$. This approach may be particularly suitable for the case when power headroom reporting for the uplink spatial directions can be independent for each of the beam. It also reduces grouping complexity.

In other words, the Embodiment 5 can be seen as a combination of Option 1-3 with Option 2-2 and Option 3-2, similarly to Embodiment 3. The PHR report and B-bits semantics may be similar as shown for Embodiment 3 in Figs. 25 and 26, respectively.

Correspondingly, depicted here for J = 2; $0 \leq D' \leq 4$. If a P field is zero, then MPE field is reserved, otherwise P-MPR value is reported. The 3-bit field $B_1B_2B_3$, indicates the number of candidate beams reported, here shown $0 \leq D' \leq 4$. When $B_1B_2B_3$ is 000, no P-MPR for candidate beams are reported. When a beam is not reported, corresponding $P'_j$ may be reserved.

For instance, a communication apparatus 510 comprises circuitry 530 which, in operation, determines to indicate a power reduction requirement for each of a plurality of spatial directions, and, based on the result of the determination, generates a power headroom report including, for each of the plurality of spatial directions, a power reduction requirement indication, and a transceiver 520 which, in operation, transmits the power headroom report.

The transceiver, in operation, may send a the transceiver, in operation, sends a notification that power reduction is indicated for each of the plurality of groups of spatial directions.

If the UE does not send the notification, it may transmit a PHR having spatial direction based indication of the power reduction requirement.

For instance, the notification may be transmitted in a capability report.

The circuitry 530, in operation, may determine, for each of the plurality of simultaneous transmissions, the power headroom level based on a respective power maximum, and the power headroom report may include each of the respective power maxima.

Embodiment 5 may facilitate reducing dynamic signaling overhead in the PHR since an indication whether the power reduction requirement is based on spatial directions or group based may already be provided by the by a notification, e.g. semi-statically in a capability report, and need not be included in the PHR.

## EMBODIMENT 6

When the UE does not report the uplink full power transmission (ULFPTx) capability and a capability report that any combination of uplink spatial directions does not exceed power and regulatory constraints, then the UE only reports group-based power headroom.

In this case, no toggle bit T is included in the PHR. The UE interprets the rest of PH MAC-CE fields as it did for T = 1 in embodiments 1-1 to 1-4. In other words, Embodiment 6 has four sub-embodiments 6-1, 6-2, 6-3, and 6-4 that correspond to embodiments 1-1, 1-2, 1-3, and 1-4, respectively, but supporting Option 3-1 and not Option 3-2.

For instance, provided is a communication apparatus 510 comprising circuitry which, in operation, determines whether to indicate a power reduction requirement for each of a plurality of spatial directions or for each of one or more groups of the plurality of spatial directions, and, based on the result of the determination, generates a power headroom report including, for each of the plurality of spatial directions or for each of the one or more groups of the plurality of spatial directions, a power reduction requirement indication, and a transceiver which, in operation, transmits the power headroom report.

If the transceiver does not send a capability report indicating that the power reduction is indicated for each of the plurality of spatial directions or a report that the communication apparatus has uplink full power transmission capability to indicate that the power reduction is indicated for each of the plurality of spatial directions, the power headroom report includes the power reduction requirement indication for each of the plurality of groups of the plurality of spatial directions.

In such case, the power headroom report need not include the above-mentioned toggle bit, or the power headroom report includes the power reduction requirement indication for each of the plurality of groups of the plurality of spatial directions irrespectively of a value of the toggle bit (which need not be included in the PHR then, or, if present, is treated as a reserved bit rather than an actual toggle bit). In other words, the toggle bit may be reserved or omitted from the power headroom report.

If the transceiver does send the capability report, or if a capability report does not include both indications of uplink full power transmission (ULFPTx) capability and a capability report that any combination of uplink spatial directions does not exceed power and regulatory constraint, then the PHR reports the power reduction requirement per spatial direction, or, alternatively the toggle bit is used as shown in embodiment 1. Embodiment 6 may facilitate reducing dynamic signaling overhead in the PHR since an indication whether the power reduction requirement is based on spatial directions or group based may already be provided by the capability report.

The above mentioned PHR embodiments may be implemented by a corresponding devices and methods.

For instance, a transceiver of a communication apparatus 510 (e.g. a UE) may comprise a plurality of antennas or (antenna) panels and, in operation, may perform, on each one of the plurality of panels, one of a plurality of simultaneous transmissions. The power headroom level may then be indicated in the PHR for each of the plurality of simultaneous transmissions, of which each one is performed using a corresponding antenna or panel.

For example, Fig. 27 shows a communication system 500 including a first device 510 and a second communication device 560. In the present example, the first communication device 510 is a UE whereas the second communication device 560 is a network node such as a base station (gNB). The UE 510 and the base station 560 communicate over a wireless channel 550.

The UE comprises a transceiver 520 and circuitry 530. The transceiver may include transmitter and/or receiver. Such transmitter and/or receiver may include antennas and analog front end (e.g. including upconversion and amplification and the like). The antennas may be two or more panels (2D antenna arrays).

The base station (network node) comprises a transceiver 570 and circuitry 580. Similarly as in the UE, the transceiver may include transmitter and/or receiver. Such transmitter and/or receiver may include antenna(s) and analog front end (e.g. including upconversion and amplification and the like). The antennas may be two or more panels (2D antenna arrays).

Circuitry 530 and circuitry 580 may include any electronics such as one or more processors and/or FPGAs or ASICs or the like. Circuitry 530 and circuitry 580 may be configured to respectively control the transceiver to receive and/or transmit data.

In particular, the circuitry 530 (and in particular, a PHR generating circuitry 535 that is a part of the generic circuitry 530 in the UE 510) is configured to generate a power headroom report including, for each of one or more groups of a plurality of spatial directions, a power reduction requirement indication. Then the transceiver 520 transmits the power headroom report generated by the circuitry.

In the base station 560, the transceiver 570 receives the power headroom report of the communication apparatus (UE 510). The circuitry 580 (and in particular, a PHR determining circuitry 585 that is a part of the generic circuitry 580 in the gNB 560) determines (is configured to determine), from the power headroom report, for each of one or more groups of the plurality of spatial directions, the power reduction requirement indication.

Fig. 28 illustrates an exemplary functional structure of the circuitry 530, which does not necessarily only include the PHR generating circuitry 535, but also a control/data processing circuitry 533 which may perform the function of controlling the transceiver 520 to perform the transmission of the PHR. Possibly, the control/data processing circuitry 533 may be also configured to control the transceiver 520 to perform other transmissions and receptions, such as reception of a DCI or the like.

In an exemplary implementation, which may be combined with any of the above mentioned embodiments, the PHR generating circuitry 535, in operation, determines whether to indicate a power reduction requirement for each of a plurality of spatial directions or for each of one or more groups of the plurality of spatial directions. Based on this determination (if the circuitry 535 of the UE decides so or is configured by a gNB to do so or the like), a module 353_2 (part of the PHR generating circuitry 535) generates a power headroom report including, for each of the plurality of spatial directions, a power reduction requirement indication. Alternatively, based on the determination (if the circuitry 535 of the UE decides so or is configured by a gNB to do so or the like), a module 353_1 (part of the PHR generating circuitry 535) generates a power headroom report including, for each of the groups of the plurality of spatial directions, a power reduction requirement indication.

It is noted that the circuitry 530 may perform further functions and that the functional modules of this circuitry 530 are only exemplary.

Correspondingly to the UE 510, the network node (gNB) may include the PHR determining circuitry 585 as shown in Fig. 29.

The circuitry 580 may, apart from the PHR determining circuitry 585 further comprise control/data processing circuitry 583 which may perform the function of controlling the transceiver 570 to perform the reception of the PHR. Possibly, the control/data processing circuitry 583 may be also configured to control the transceiver 570 to perform other transmissions and receptions, such as transmission of a DCI to the UE 510 or the like.

In an exemplary implementation, which may be combined with any of the above mentioned embodiments, the PHR determining circuitry 585, in operation, determines whether the received power reduction requirement indication is an for each of a plurality of spatial directions or for each of one or more groups of the plurality of spatial directions. Based on this determination (if the received power reduction requirement indication is determined to be for each of a plurality of individual spatial directions), a module 383_2 (part of the PHR determining circuitry 585) interprets the received power headroom report including, for each of the plurality of individual spatial directions, a power reduction requirement indication.

Alternatively, based on the determination (if the received power reduction requirement indication is determined to be for each of a groups of the plurality of individual spatial directions), a module 383_1 (part of the PHR determining circuitry 585) determines a power headroom report including, for each of the groups of the plurality of spatial directions, a power reduction requirement indication.

The determination on whether the PHR is for a group of beams or for individual beams can be performed in various ways as described above, e.g. by interpreting a toggle bit or by interpreting a UE capability report or in another predetermined manner.

It is noted that the circuitry 580 may perform further functions and that the functional modules of this circuitry 580 are only exemplary. For example, the circuitry 580 may use the power reduction requirement indication determined in the PHR determining circuitry 585 from the received PHR. In particular, the circuitry 580 may include a scheduling module, which may take into account the power reduction requirement indication for scheduling resources for the UE 510 that sent the power reduction requirement indication or for other UEs.

In other words, the network node (e.g. base station) 560 may perform scheduling based on the received power reduction requirement indication. The scheduling may be performed in any way known by a skilled person. The power reduction requirement indication may be used for instance to further constraint such known scheduling approaches.

For instance, the scheduling base station may use the PHR to first adjust the transmission of the data rate of the UE relative to previous transmission, and also determine which uplink beams the UE can transmit on simultaneously according to a certain criteria like maximizing throughput or satisfying power emission constraints.

As described in the above embodiments, the power headroom report may have various different advantageous formats. Correspondingly, the network node (base station, gNB) interprets these reports and determines the power reduction requirement indication accordingly.

In summary, according to the first embodiment, a UE can dynamically choose to report either group-based power headroom or individual-beam-based power headroom by using the toggle bit. Correspondingly, the base station (in particular circuitry 585) determines a value of the toggle bit from the received PHR. Based on the value of the toggle bit, the base station then determines whether the power headroom is reported for individual spatial directions (corresponding to a first value of the toggle bit) or for groups of individual spatial directions (a second value of the toggle bit). Then, the base station interprets the power reduction requirement indication accordingly (as a report per individual beam or per group of beams).

According to the second embodiment, for simultaneous multi-panel (STxMP) UL transmission, the UE 510 only reports group-based power headroom. No toggle bit is necessary. Correspondingly, the base station (circuitry 585) determines the power reduction requirement indication in the PHR to be per group of individual directions.

According to the third embodiment, when the UE 510 sends a capability report indicating that any combination of uplink spatial directions does not exceed power and regulatory constraints, the base station 560 (its circuitry 585) interprets this as indicating that the power reduction requirement indication is indicates only per individual spatial directions (beams) and not per groups.

According to the fourth embodiment, when the UE 510 reports uplink full power transmission (ULFPTx) capability, the base station 560 (its circuitry 585) interprets this so that any combination of uplink spatial directions does not exceed power and regulatory constraints and that the UE 510 will only report individual-beam-based power headroom. In other words, the base station interprets this as indicating that the power reduction requirement indication is indicates only per individual spatial directions (beams) and not per groups.

According to the fifth embodiment, the UE 510 will only report beam-based power headroom, unless it notifies the base station that group-based reporting is necessary to meet power and regulatory constraints and/or some combination of uplink spatial directions can exceed power and regulatory constraints. Correspondingly, the base station interprets the power reduction requirement indication within a PHR as individual-beam-based unless it received, from the UE 510, an indication to the contrary (meaning group-based reporting). Upon receiving such indication of the group-based reporting, the power reduction requirement indication in the PHRs received from the UE 510, is interpreted by the base station as group-based.

According to the sixth embodiment, when the UE 510 does not report uplink full power transmission (ULFPTx) capability and a capability report that any combination of uplink spatial directions does not exceed power and regulatory constraints, then the UE only reports group-based power headroom. Correspondingly, the base station receives and interprets the UE capability report. If the capability report of uplink full power transmission (ULFPTx) capability and a capability report that any combination of uplink spatial directions does not exceed power and regulatory constraints is not received, then the base station interest the power reduction requirement indication in the PHRs received from the UE 510 as group-based.

The UE is RRC configured with an indexed pool of reference signals (for example synchronization signals or channel state information reference signals) representing a pool of beams or TCI states, on which to perform MPE measurements. The beams can be spatially pointing towards multiple TRPs. The group of UL spatial directions can consist of a list of indices of reference signals in the RRC configured pool. The UE can choose the spatial directions in one group based on different criteria, for example the beams that can be transmitted simultaneously with little interference, the beams that can be transmitted simultaneously with little spatial overlap between the beams, or for example the beams that the UE can receive simultaneously. Alternatively, the group of UL spatial directions can be pointed to by a single index in an interim table dynamically activated, where each entry in the interim table consists of a number of indices in the RRC configured pool. The interim table can be activated by gNodeB, and the gNB informs the UE about it dynamically with MAC-CE, or the UE can activate a table of groups of spatial directions and inform the gNodeB about the table. The groups again are picked based on different criteria, for example the beams that can be transmitted simultaneously with little interference, the beams that can be transmitted simultaneously with little spatial overlap between the beams, or for example the beams that the UE can receive simultaneously.

The present disclosure further provides an integrated circuit, IC, that corresponds to the circuitry 530 of the UE 510 described above in any of the embodiments. Moreover, present disclosure further provides an integrated circuit, IC, that corresponds to the circuitry 580 of the base station 560 described above in any of the embodiments.

It is noted that the steps performed by the circuitry mentioned above may also constitute a method. In other words, a method to be performed at a UE may include a step of generating a power headroom report including, for each of one or more groups of a plurality of spatial directions, a power reduction requirement indication; and a step of transmitting the power headroom report.

Correspondingly, a method to be performed at a base station may include a step of receiving the power headroom report; and a step of determining (interpreting) the power headroom report as including, for each of one or more groups of a plurality of spatial directions, a power reduction requirement indication.

Moreover, a method is provided for a UE that includes determining whether to indicate a power reduction requirement for each of a plurality of spatial directions or for each of one or more groups of the plurality of spatial directions, and, based on the result of the determination, generating a power headroom report including, for each of the plurality of spatial directions or for each of the one or more groups of the plurality of spatial directions, a power reduction requirement indication. The method further includes transmitting the power headroom report.

The UE may determine whether to indicate a power reduction requirement for each of a plurality of spatial directions or for each of one or more groups of the plurality of spatial directions based on one or more of the UE's power class, RF architecture and/or capabilities in general. The UE may report the capabilities and features the UE can support to the network, e.g. in a capability report.

Correspondingly, a method is provided for the base station, that includes receiving the power headroom report and determining whether to interpret (determine) a power reduction requirement for each of a plurality of spatial directions or for each of one or more groups of the plurality of spatial directions, and, based on the result of the determination, determining (interpreting) a power headroom report including, for each of the plurality of spatial directions or for each of the one or more groups of the plurality of spatial directions, a power reduction requirement indication.

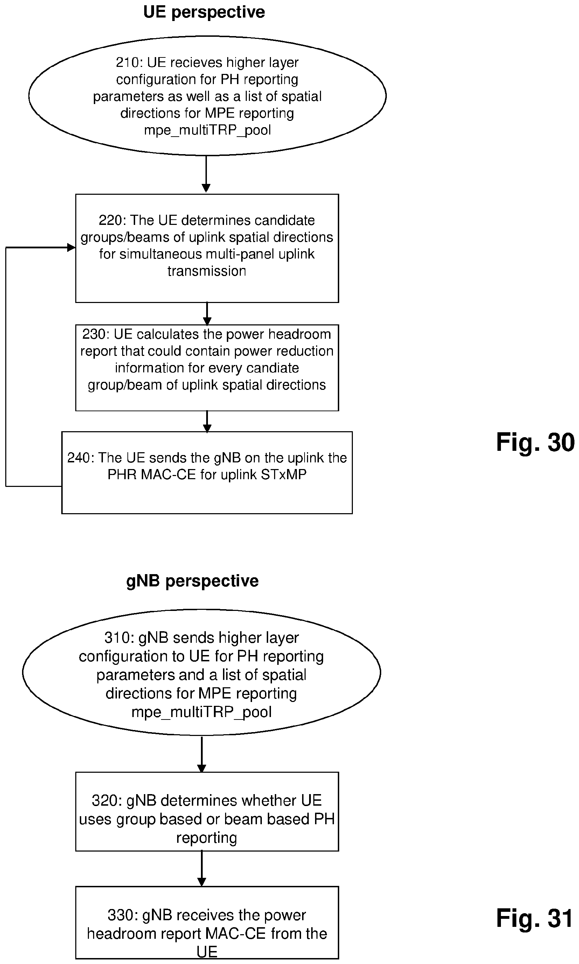

An exemplary method for a UE is illustrated in Fig. 30, whereas an exemplary method for a base station is illustrated in Fig. 31. Since the UE and the base station may communicate, in the following, the UE steps and the base station steps are described together.

The base station (gNB) sends 310 a higher layer configuration to the UE for PH reporting parameters and a list of spatial directions for MPE reporting *mpe_multiTRP_pool.* The higher layer configuration may be an RRC configuration. Correspondingly, the UE receives 210 the higher layer configuration for PH reporting parameters as well as the list of spatial directions for MPE reporting *mpe_multiTRP_pool.*

In step 220, the UE determines candidate groups and/or beams (depending on the embodiment) of uplink spatial directions for simultaneous multi-panel uplink transmission. In step 230, the UE calculates the power headroom report that could contain power reduction information for every candidate group and/or beam of uplink spatial directions as described in any of the above embodiments.

Finally, in step 240, the UE sends the gNB on the uplink the PHR MAC-CE for uplink STxMP according to any of the above described embodiments and examples.

Correspondingly, in step 320, the gNB determines whether UE has decided to use group based or beam based PH reporting (e.g. based on the UE reporting on the capabilities as described in embodiments 3-6 or based on the toggle bit, or the like). This may be performed before or after the UE transmits the PHR. In step 330, the gNB receives the power headroom report MAC-CE (transmitted from the UE in step 240) from the UE.

It is noted that the above mentioned methods are only exemplary. The present disclosure provides a method for any PHR format discussed above, correspondingly to the steps described as performed by the respective circuits of the UE and the base station.

*Hardware and Software Implementation of the present disclosure*

The present disclosure can be realized by software, hardware, or software in cooperation with hardware. Each functional block used in the description of each embodiment described above can be partly or entirely realized by an LSI such as an integrated circuit, and each process described in the each embodiment may be controlled partly or entirely by the same LSI or a combination of LSIs. The LSI may be individually formed as chips, or one chip may be formed so as to include a part or all of the functional blocks. The LSI may include a data input and output coupled thereto. The LSI here may be referred to as an IC, a system LSI, a super LSI, or an ultra LSI depending on a difference in the degree of integration. However, the technique of implementing an integrated circuit is not limited to the LSI and may be realized by using a dedicated circuit, a general-purpose processor, or a special-purpose processor. In addition, a FPGA (Field Programmable Gate Array) that can be programmed after the manufacture of the LSI or a reconfigurable processor in which the connections and the settings of circuit cells disposed inside the LSI can be reconfigured may be used. The present disclosure can be realized as digital processing or analogue processing. If future integrated circuit technology replaces LSIs as a result of the advancement of semiconductor technology or other derivative technology, the functional blocks could be integrated using the future integrated circuit technology. Biotechnology can also be applied.

The present disclosure can be realized by any kind of apparatus, device or system having a function of communication, which is referred to as a communication apparatus.

The communication apparatus may comprise a transceiver and processing/control circuitry. The transceiver may comprise and/or function as a receiver and a transmitter. The transceiver, as the transmitter and receiver, may include an RF (radio frequency) module including amplifiers, RF modulators/demodulators and the like, and one or more antennas.

Some non-limiting examples of such a communication apparatus include a phone (e.g, cellular (cell) phone, smart phone), a tablet, a personal computer (PC) (e.g, laptop, desktop, netbook), a camera (e.g, digital still/video camera), a digital player (digital audio/video player), a wearable device (e.g, wearable camera, smart watch, tracking device), a game console, a digital book reader, a telehealth/telemedicine (remote health and medicine) device, and a vehicle providing communication functionality (e.g., automotive, airplane, ship), and various combinations thereof.

The communication apparatus is not limited to be portable or movable, and may also include any kind of apparatus, device or system being non-portable or stationary, such as a smart home device (e.g, an appliance, lighting, smart meter, control panel), a vending machine, and any other "things" in a network of an "Internet of Things (IoT)".

The communication may include exchanging data through, for example, a cellular system, a wireless LAN system, a satellite system, etc., and various combinations thereof.

The communication apparatus may comprise a device such as a controller or a sensor which is coupled to a communication device performing a function of communication described in the present disclosure. For example, the communication apparatus may comprise a controller or a sensor that generates control signals or data signals which are used by a communication device performing a communication function of the communication apparatus.

The communication apparatus also may include an infrastructure facility, such as a base station, an access point, and any other apparatus, device or system that communicates with or controls apparatuses such as those in the above non-limiting examples.

Furthermore, the various embodiments may also be implemented by means of software modules, which are executed by a processor or directly in hardware. Also a combination of software modules and a hardware implementation may be possible. The software modules may be stored on any kind of computer-readable storage media. In particular, according to another implementation, a non-transitory computer-readable recording medium is provided. The recording medium stores a program which, when executed by one or more processors, causes the one or more processors to carry out the steps of a method according to the present disclosure.

By way of example, and not limiting, such computer-readable storage media can comprise RAM, ROM, EEPROM, CD-ROM or other optical disk storage, magnetic disk storage, or other magnetic storage devices, flash memory, or any other medium that can be used to store desired program code in the form of instructions or data structures and that can be accessed by a computer. Also, any connection is properly termed a computer-readable medium. For example, if instructions are transmitted from a website, server, or other remote source using a coaxial cable, fiber optic cable, twisted pair, digital subscriber line (DSL), or wireless technologies such as infrared, radio, and microwave, then the coaxial cable, fiber optic cable, twisted pair, DSL, or wireless technologies such as infrared, radio, and microwave are included in the definition of medium. It should be understood, however, that computer-readable storage media and data storage media do not include connections, carrier waves, signals, or other transitory media, but are instead directed to non-transitory, tangible storage media. Disk and disc, as used herein, includes compact disc (CD), laser disc, optical disc, digital versatile disc (DVD), floppy disk and Blu-ray disc, where disks usually reproduce data magnetically, while discs reproduce data optically with lasers. Combinations of the above should also be included within the scope of computer-readable media.

It should be further noted that the individual features of the different embodiments may individually or in arbitrary combination be subject matter to another embodiment. It would be appreciated by a person skilled in the art that numerous variations and/or modifications may be made to the present disclosure as shown in the specific embodiments. The present embodiments are, therefore, to be considered in all respects to be illustrative and not restrictive.

*Further Aspects*

Aspect 1. A communication apparatus, comprising circuitry which in operation, generates a power headroom report including, for each of one or more groups of a plurality of spatial directions, a power reduction requirement indication; and a transceiver which, in operation, transmits the power headroom report.

Aspect 2. A communication apparatus, comprising: circuitry which, in operation, determines whether to indicate a power reduction requirement for each of a plurality of spatial directions or for each of one or more groups of the plurality of spatial directions, and, based on the result of the determination, generates a power headroom report including, for each of the plurality of spatial directions or for each of the one or more groups of the plurality of spatial directions, a power reduction requirement indication, and a transceiver which, in operation, transmits the power headroom report.

Aspect 3. The communication apparatus according to aspect 2, wherein the power headroom report includes a toggle bit indicating whether the power reduction requirement is indicated for each of the plurality of spatial directions or for each of the plurality of groups of the plurality of spatial directions.

Aspect 4. The communication apparatus according to aspect 2 or 3, wherein, the transceiver, in operation, sends a capability report indicating that the power reduction requirement is group independent or that the communication apparatus has uplink full power transmission capability to indicate that the power reduction requirement is indicated for each of the plurality of spatial directions.

Aspect 5. The communication apparatus according to aspect 2 or 3, wherein the transceiver, in operation, sends a notification that power reduction is indicated for each of the plurality of groups of spatial directions.

Aspect 6. The communication apparatus according to aspect 2 or 3, wherein, if the transceiver does not send a capability report indicating that the power reduction is indicated for each of the plurality of spatial directions or a report that the communication apparatus has uplink full power transmission capability to indicate that the power reduction is indicated for each of the plurality of spatial directions, the power headroom report includes the power reduction requirement indication for each of the plurality of groups of the plurality of spatial directions.

Aspect 7. The communication apparatus according to any one of aspects 1 to 6, wherein the power headroom report includes a bit field indicating a number of the plurality of spatial directions or a number of the plurality of groups of spatial directions.

Aspect 8. The communication apparatus according to any one of aspects 1 to 7, wherein the power reduction requirement indication includes an indication whether power reduction is required and, if power reduction is required, an index of the group or spatial direction, and a value of the power reduction required.

Aspect 9. The communication apparatus according to any one of aspects 1 to 8, wherein the transceiver comprises a plurality of panels and is capable of performing, on each one of the plurality of panels, one of a plurality of simultaneous transmissions.

Aspect 10. The communication apparatus according to aspect 9, wherein, if the power reduction requirement is indicated per group, the power reduction requirement indication is indicated for each one of the plurality of simultaneous transmissions.

Aspect 11. The communication apparatus according to aspect 9 or 10, wherein the circuity, in operation, determines, for each one of plurality of simultaneous transmissions, a power headroom level, and the power headroom report includes, for each one of the plurality of simultaneous transmissions, a power headroom level indication indicating a power headroom level, a format bit indicating whether the power headroom level is determined based on a measurement or on a reference format, and a reduction application indication including an indication whether power reduction is applied, and, if applied, a value of the applied power reduction.

Aspect 12. The communication apparatus according to aspect 11, wherein the circuitry, in operation, determines the power headroom levels for all of the plurality of simultaneous transmissions based on a common power maximum, and the power headroom report includes the common power maximum.

Aspect 13. The communication apparatus according to aspect 11, wherein the circuitry, in operation, determines, for each of the plurality of simultaneous transmissions, the power headroom level based on a respective power maximum, and the power headroom report includes each of the respective power headroom level.

Aspect 14. The communication apparatus according to any one of aspects 1 to 15, wherein each of the plurality of groups of spatial directions corresponds to a list of indices of the plurality of spatial directions or a single index referring to an interim table mapping the index to the spatial directions within the group.

Aspect 15. A base station comprising: a transceiver which, in operation, receives a power headroom report of a communication apparatus; and circuitry which, in operation, determines from the power headroom report, for each of one or more groups of a plurality of spatial directions, a power reduction requirement indication.

Aspect 16. A base station comprising: a transceiver which, in operation, receives a power headroom report of a communication apparatus; and circuitry which, in operation, determines from the power headroom report whether the power headroom report indicates a power reduction requirement for each of a plurality of spatial directions or for each of one or more groups of the plurality of spatial directions, and, in operation, determines, from the power headroom report, for each of the plurality of spatial directions or for each of the one or more groups of the plurality of spatial directions, a power reduction requirement indication.

Aspect 17. The base station according to aspect 16, wherein the power headroom report includes a toggle bit indicating whether the power reduction requirement is indicated for each of the plurality of spatial directions or for each of the plurality of groups of the plurality of spatial directions.

Aspect 18. The base station according to aspect 16 or 17, wherein, the transceiver, in operation, receives a capability report indicating that the power reduction requirement is group independent or that the communication apparatus has uplink full power transmission capability to indicate that the power reduction requirement is indicated for each of the plurality of spatial directions.

Aspect 19. The base station according to aspect 16 or 17, wherein the transceiver, in operation, receives a notification that power reduction is indicated for each of the plurality of groups of spatial directions.

Aspect 20. The base station according to aspect 16 or 17, wherein, if the transceiver does not receive a capability report indicating that the power reduction is indicated for each of the plurality of spatial directions or a report that the communication apparatus has uplink full power transmission capability to indicate that the power reduction is indicated for each of the plurality of spatial directions, the power headroom report includes the power reduction requirement indication for each of the plurality of groups of the plurality of spatial directions.

Aspect 21. The base station according to any one of aspects 15 to 20, wherein the power headroom report includes a bit field indicating a number of the plurality of spatial directions or a number of the plurality of groups of spatial directions.

Aspect 22. The base station according to any one of aspects 15 to 21, wherein the power reduction requirement indication includes an indication whether power reduction is required and, if power reduction is required, an index of the group or spatial direction, and a value of the power reduction required.

Aspect 23. The base station according to any one of aspects 15 to 22, wherein the transceiver is capable of receiving one of a plurality of simultaneous transmissions transmitted simultaneously from the communication apparatus.

Aspect 24. The base station according to aspect 23, wherein, if the power reduction requirement is indicated per group, the power reduction requirement indication is indicated for each one of the plurality of simultaneous transmissions.

Aspect 25. The base station according to aspect 23 or 24, wherein the power headroom report includes, for each one of the plurality of simultaneous transmissions, a power headroom level indication indicating a power headroom level, a format bit indicating whether the power headroom level is determined based on a measurement or on a reference format, and a reduction application indication including an indication whether power reduction is applied, and, if applied, a value of the applied power reduction.

Aspect 26. The base station according to aspect 25, wherein the power headroom report includes the common power maximum for determining the power headroom levels for all of the plurality of simultaneous transmissions.

Aspect 27. The base station according to aspect 25, wherein the power headroom report includes, for each of the plurality of simultaneous transmissions, a respective power maximum for determining the respective power headroom level.

Aspect 28. The base station according to any one of aspects 15 to 27, wherein each of the plurality of groups of spatial directions corresponds to a list of indices of the plurality of spatial directions or a single index referring to an interim table mapping the index to the spatial directions within the group.

Aspect 29. A communication method for a communication apparatus, comprising: generating a power headroom report including, for each of one or more groups of a plurality of spatial directions, a power reduction requirement indication; and transmitting the power headroom report.

Aspect 30. A communication method for a communication apparatus, comprising: determining whether to indicate a power reduction requirement for each of a plurality of spatial directions or for each of one or more groups of the plurality of spatial directions; based on the result of the determination, generating a power headroom report including, for each of the plurality of spatial directions or for each of the one or more groups of the plurality of spatial directions, a power reduction requirement indication; and transmitting the power headroom report.

Aspect 31. A communication method for a base station, comprising: receiving a power headroom report of a communication apparatus; and determining from the power headroom report, for each of one or more groups of a plurality of spatial directions, a power reduction requirement indication.

Aspect 32. A communication method for a base station, comprising: receiving a power headroom report of a communication apparatus; determining from the power headroom report whether the power headroom report indicates a power reduction requirement for each of a plurality of spatial directions or for each of one or more groups of the plurality of spatial directions; determining, from the power headroom report, for each of the plurality of spatial directions or for each of the one or more groups of the plurality of spatial directions, a power reduction requirement indication.

Further provided are an integrated circuit configured for controlling a communication device, to carry out the method according to the twenty-ninth or thirtieth aspect, and an integrated circuit for controlling a base station to carry out the communication method according to the thirty-first or thirty-second aspect.

In addition, a non-transitory medium is provided storing program instructions which, when executed on a processing circuitry such as a general purpose processor, cause the processing circuitry to perform all steps of the above mentioned method embodiments or aspects.

**Claims**

1. A communication apparatus, comprising:

circuitry which in operation, generates a power headroom report including, for each of one or more groups of a plurality of spatial directions, a power reduction requirement indication; and
a transceiver which, in operation, transmits the power headroom report.

2. A communication apparatus, comprising:

circuitry which, in operation, determines whether to indicate a power reduction requirement for each of a plurality of spatial directions or for each of one or more groups of the plurality of spatial directions, and, based on the result of the determination, generates a power headroom report including, for each of the plurality of spatial directions or for each of the one or more groups of the plurality of spatial directions, a power reduction requirement indication, and
a transceiver which, in operation, transmits the power headroom report.

3. The communication apparatus according to claim 2, wherein the power headroom report includes a toggle bit indicating whether the power reduction requirement is indicated for each of the plurality of spatial directions or for each of the plurality of groups of the plurality of spatial directions.

4. The communication apparatus according to claim 2 or 3, wherein, the transceiver, in operation, sends a capability report indicating that the power reduction requirement is group independent or that the communication apparatus has uplink full power transmission capability to indicate that the power reduction requirement is indicated for each of the plurality of spatial directions.

5. The communication apparatus according to claim 2 or 3, wherein the transceiver, in operation, sends a notification that power reduction is indicated for each of the plurality of groups of spatial directions.

6. The communication apparatus according to claim 2 or 3, wherein, if the transceiver does not send a capability report indicating that the power reduction is indicated for each of the plurality of spatial directions or a report that the communication apparatus has uplink full power transmission capability to indicate that the power reduction is indicated for each of the plurality of spatial directions, the power headroom report includes the power reduction requirement indication for each of the plurality of groups of the plurality of spatial directions.

7. The communication apparatus according to any one of claims 1 to 6, wherein the power headroom report includes a bit field indicating a number of the plurality of spatial directions or a number of the plurality of groups of spatial directions.

8. The communication apparatus according to any one of claims 1 to 7, wherein the power reduction requirement indication includes an indication whether power reduction is required and, if power reduction is required, an index of the group or spatial direction, and a value of the power reduction required.

9. The communication apparatus according to any one of claims 1 to 8, wherein the transceiver comprises a plurality of panels and is capable of performing, on each one of the plurality of panels, one of a plurality of simultaneous transmissions.

10. The communication apparatus according to claim 9, wherein, if the power reduction requirement is indicated per group, the power reduction requirement indication is indicated for each one of the plurality of simultaneous transmissions.

11. The communication apparatus according to claim 9 or 10, wherein the circuity, in operation, determines, for each one of plurality of simultaneous transmissions, a power headroom level, and the power headroom report includes, for each one of the plurality of simultaneous transmissions, a power headroom level indication indicating a power headroom level, a format bit indicating whether the power headroom level is determined based on a measurement or on a reference format, and a reduction application indication including an indication whether power reduction is applied, and, if applied, a value of the applied power reduction.

12. The communication apparatus according to claim 11, wherein the circuitry, in operation, determines the power headroom levels for all of the plurality of simultaneous transmissions based on a common power maximum, and the power headroom report includes the common power maximum.

13. The communication apparatus according to claim 11, wherein the circuitry, in operation, determines, for each of the plurality of simultaneous transmissions, the power headroom level based on a respective power maximum, and the power headroom report includes each of the respective power headroom level.

14. The communication apparatus according to any one of claims 1 to 13, wherein each of the plurality of groups of spatial directions corresponds to a list of indices of the plurality of spatial directions or a single index referring to an interim table mapping the index to the spatial directions within the group.

15. A base station comprising:

   a transceiver which, in operation, receives a power headroom report of a communication apparatus; and circuitry which, in operation, determines from the power headroom report, for each of one or more groups of a plurality of spatial directions, a power reduction requirement indication.

**Fig. 1**

**Fig. 2**

**Fig. 3**

**Fig. 4**

**Fig. 5**

**Fig. 6**

TRP 1                             TRP 2

DCI 1        DCI 2

UL PUSCH        UL PUSCH

710                         720

UE

**Fig. 7**

| P | R | PH (Type 1, PCell) | | | | | | Oct 1 |
|---|---|---|---|---|---|---|---|---|
| MPE or R | | $P_{CMAX,f,c}$ | | | | | | Oct 2 |
| $B_1$ | $B_2$ | $B_3$ | $B_4$ | $P_1$ | $P_2$ | $P_3$ | $P_4$ | Oct 3 |
| MPE$_1$ or R | | MPE$_2$ or R | | MPE$_3$ or R | | MPE$_4$ or R | | Oct 4 |
| R | R | Resource$_1$ | | | | | | Oct 5 |
| R | R | Resource$_2$ | | | | | | Oct 6 (Optional) |
| R | R | Resource$_3$ | | | | | | Oct 7 (Optional) |
| R | R | Resource$_4$ | | | | | | Oct 8 (Optional) |

Figure 6.1.3.48-1: Enhanced Single Entry PHR MAC CE

**Fig. 8**

| | | | |
|---|---|---|---|
| P | V | PH 1 (Type 1, PCell) | Oct 1 |
| R | V | PH 2 (Type 1, PCell) | Oct 2 |
| MPE or R | | $P_{CMAX,f,c}$ | Oct 3 |

Figure 6.1.3.50-1: Enhanced Single Entry PHR for multiple TRP MAC CE

## Fig. 9

100

Group 1 PH values

Group 2 PH values

.
.
.

Group D PH values

Power headroom group reporting for STxMP

## Fig. 10

CW

CW-layer mapping

layers

TPMI / SRI 1

TPMI / SRI 2

PUSCH ports

Panel 1

Panel 2

Layers 0, 1

Layers 2, 3

TRP1

gNB

TRP2

UE

## Fig. 11

Fig. 12

| G₁G₂G₃ field | T = 1 | T = 0 |
|---|---|---|
| 000 | No groups reported, only read 4 octets | No beams reported, only read 4 octets |
| 001 | 1 group reported, only read 6 octets | 1 beam reported, only read 6 octets |
| 010 | 2 groups reported, only read 7 octets | 2 beams reported, only read 7 octets |
| 011 | 3 groups reported, only read 8 octets | 3 beams reported, only read 8 octets |
| 100 | 4 groups reported, only read 9 octets | 4 beams reported, only read 9 octets |
| Other values are reserved | | |

Fig. 13

| P$_1$ | V$_1$ | PH$_1$ | | | | | |
|---|---|---|---|---|---|---|---|
| MPE$_1$ or R | | P$_{lim,1}$ | | | | | |
| P$_2$ | V$_2$ | PH$_2$ | | | | | |
| MPE$_2$ or R | | P$_{lim,2}$ | | | | | |
| G$_1$ | G$_2$ | G$_3$ | T | R | R | R | R |
| P$_{11}$ | P$_{12}$ | P$_{21}$ | P$_{22}$ | P$_{31}$ | P$_{32}$ | P$_{41}$ | P$_{42}$ |
| MPE$_{11}$ or R | | RS_Index$_{11}$ | | | | | |
| MPE$_{12}$ or R | | RS_Index$_{12}$ | | | | | |
| MPE$_{21}$ or R | | RS_Index$_{21}$ | | | | | |
| MPE$_{22}$ or R | | RS_Index$_{21}$ | | | | | |
| MPE$_{31}$ or R | | RS_Index$_{31}$ | | | | | |
| MPE$_{32}$ or R | | RS_Index$_{32}$ | | | | | |
| MPE$_{41}$ or R | | RS_Index$_{41}$ | | | | | |
| MPE$_{42}$ or R | | RS_Index$_{42}$ | | | | | |

Optional

## Fig. 14

| G$_1$G$_2$G$_3$ field | T = 1 | T = 0 |
|---|---|---|
| 000 | No groups reported, only read 5 octets | No beams reported, only read 5 octets |
| 001 | 1 group reported, only read 8 octets | 1 beam reported, only read 8 octets |
| 010 | 2 groups reported, only read 10 octets | 2 beams reported, only read 10 octets |
| 011 | 3 groups reported, only read 12 octets | 3 beams reported, only read 12 octets |
| 100 | 4 groups reported, only read 14 octets | 4 beams reported, only read 14 octets |
| Other values are reserved | | |

## Fig. 15

Octet

| P$_1$ | V$_1$ | PH$_1$ | | | | | |
|---|---|---|---|---|---|---|---|
| P$_2$ | V$_2$ | PH$_2$ | | | | | |
| R | R | P$_{CMAX,f,c}$ | | | | | |
| MPE$_1$ or R | | MPE$_2$ or R | | G$_1$ | G$_2$ | G$_3$ | T |
| P$_{11}$ | P$_{12}$ | P$_{21}$ | P$_{22}$ | P$_{31}$ | P$_{32}$ | P$_{41}$ | P$_{42}$ |
| MPE$_{11}$ or R | | MPE$_{12}$ or R | | Group_Index$_1$ | | | |
| MPE$_{21}$ or R | | MPE$_{22}$ or R | | Group_Index$_2$ | | | |
| MPE$_{31}$ or R | | MPE$_{32}$ or R | | Group_Index$_3$ | | | |
| MPE$_{41}$ or R | | MPE$_{42}$ or R | | Group_Index$_4$ | | | |

Optional

## Fig. 16

Octet

| P$_1$ | V$_1$ | PH$_1$ | | | | | |
|---|---|---|---|---|---|---|---|
| P$_2$ | V$_2$ | PH$_2$ | | | | | |
| R | R | P$_{CMAX,f,c}$ | | | | | |
| MPE$_1$ or R | | MPE$_2$ or R | | G$_1$ | G$_2$ | G$_3$ | 0 |
| P$_{11}$ | R | P$_{21}$ | R | P$_{31}$ | R | P$_{41}$ | R |
| MPE$_{11}$ or R | | RS_Index$_1$ | | | | | |
| MPE$_{21}$ or R | | RS_Index$_2$ | | | | | |
| MPE$_{31}$ or R | | RS_Index$_3$ | | | | | |
| MPE$_{41}$ or R | | RS_Index$_4$ | | | | | |

Optional

## Fig. 17

| G$_1$G$_2$G$_3$ field | T = 1 | T = 0 |
|---|---|---|
| 000 | No groups reported, only read 4 octets | No beams reported, only read 4 octets |
| 001 | 1 group reported, only read 6 octets | 1 beam reported, only read 6 octets |
| 010 | 2 groups reported, only read 7 octets | 2 beams reported, only read 7 octets |
| 011 | 3 groups reported, only read 8 octets | 3 beams reported, only read 8 octets |
| 100 | 4 groups reported, only read 9 octets | 4 beams reported, only read 9 octets |
| Other values are reserved | | |

## Fig. 18

Octet

| P₁ | V₁ | PH₁ | | | | | |
|---|---|---|---|---|---|---|---|
| MPE₁ or R | | P_lim,1 | | | | | |
| P₂ | V₂ | PH₂ | | | | | |
| MPE₂ or R | | P_lim,2 | | | | | |
| G₁ | G₂ | G₃ | T | R | R | R | R |
| P₁₁ | P₁₂ | P₂₁ | P₂₂ | P₃₁ | P₃₂ | P₄₁ | P₄₂ |
| MPE₁₁ or R | | MPE₁₂ or R | | Group_Index₁ | | | |
| MPE₂₁ or R | | MPE₂₂ or R | | Group_Index₂ | | | |
| MPE₃₁ or R | | MPE₃₂ or R | | Group_Index₃ | | | |
| MPE₄₁ or R | | MPE₄₂ or R | | Group_Index₄ | | | |

Optional

**Fig. 19**

| G₁G₂G₃ field | T = 1 | T = 0 |
|---|---|---|
| 000 | No groups reported, only read 5 octets | No beams reported, only read 5 octets |
| 001 | 1 group reported, only read 7 octets | 1 beam reported, only read 7 octets |
| 010 | 2 groups reported, only read 8 octets | 2 beams reported, only read 8 octets |
| 011 | 3 groups reported, only read 9 octets | 3 beams reported, only read 9 octets |
| 100 | 4 groups reported, only read 10 octets | 4 beams reported, only read 10 octets |
| Other values are reserved | | |

**Fig. 20**

| P$_1$ | V$_1$ | PH$_1$ | | | |
|---|---|---|---|---|---|
| P$_2$ | V$_2$ | PH$_2$ | | | |
| R | R | P$_{CMAX,f,c}$ | | | |
| MPE$_1$ or R | | MPE$_2$ or R | G$_1$ | G$_2$ | G$_3$ | R |
| P$_{11}$ | P$_{12}$ | P$_{21}$ | P$_{22}$ | P$_{31}$ | P$_{32}$ | P$_{41}$ | P$_{42}$ |
| MPE$_{11}$ or R | RS_Index$_{11}$ | | | | |
| MPE$_{12}$ or R | RS_Index$_{12}$ | | | | |
| MPE$_{21}$ or R | RS_Index$_{21}$ | | | | |
| MPE$_{22}$ or R | RS_Index$_{21}$ | | | | |
| MPE$_{31}$ or R | RS_Index$_{31}$ | | | | |
| MPE$_{32}$ or R | RS_Index$_{32}$ | | | | |
| MPE$_{41}$ or R | RS_Index$_{41}$ | | | | |
| MPE$_{42}$ or R | RS_Index$_{42}$ | | | | |

Optional

## Fig. 21

| P$_1$ | V$_1$ | PH$_1$ | | | |
|---|---|---|---|---|---|
| MPE$_1$ or R | | P$_{lim,1}$ | | | |
| P$_2$ | V$_2$ | PH$_2$ | | | |
| MPE$_2$ or R | | P$_{lim,2}$ | | | |
| G$_1$ | G$_2$ | G$_3$ | R | R | R | R | R |
| P$_{11}$ | P$_{12}$ | P$_{21}$ | P$_{22}$ | P$_{31}$ | P$_{32}$ | P$_{41}$ | P$_{42}$ |
| MPE$_{11}$ or R | RS_Index$_{11}$ | | | | |
| MPE$_{12}$ or R | RS_Index$_{12}$ | | | | |
| MPE$_{21}$ or R | RS_Index$_{21}$ | | | | |
| MPE$_{22}$ or R | RS_Index$_{21}$ | | | | |
| MPE$_{31}$ or R | RS_Index$_{31}$ | | | | |
| MPE$_{32}$ or R | RS_Index$_{32}$ | | | | |
| MPE$_{41}$ or R | RS_Index$_{41}$ | | | | |
| MPE$_{42}$ or R | RS_Index$_{42}$ | | | | |

Optional

## Fig. 22

Octet

| P$_1$ | V$_1$ | PH$_1$ | | | | | |
|---|---|---|---|---|---|---|---|
| P$_2$ | V$_2$ | PH$_2$ | | | | | |
| R | R | P$_{CMAX,f,c}$ | | | | | |
| MPE$_1$ or R | | MPE$_2$ or R | | G$_1$ | G$_2$ | G$_3$ | R |
| P$_{11}$ | P$_{12}$ | P$_{21}$ | P$_{22}$ | P$_{31}$ | P$_{32}$ | P$_{41}$ | P$_{42}$ |
| MPE$_{11}$ or R | | MPE$_{12}$ or R | | Group_Index$_1$ | | | |
| MPE$_{21}$ or R | | MPE$_{22}$ or R | | Group_Index$_2$ | | | |
| MPE$_{31}$ or R | | MPE$_{32}$ or R | | Group_Index$_3$ | | | |
| MPE$_{41}$ or R | | MPE$_{42}$ or R | | Group_Index$_4$ | | | |

Optional

**Fig. 23**

Octet

| P$_1$ | V$_1$ | PH$_1$ | | | | | |
|---|---|---|---|---|---|---|---|
| MPE$_1$ or R | | P$_{lim,1}$ | | | | | |
| P$_2$ | V$_2$ | PH$_2$ | | | | | |
| MPE$_2$ or R | | P$_{lim,2}$ | | | | | |
| G$_1$ | G$_2$ | G$_3$ | R | R | R | R | R |
| P$_{11}$ | P$_{12}$ | P$_{21}$ | P$_{22}$ | P$_{31}$ | P$_{32}$ | P$_{41}$ | P$_{42}$ |
| MPE$_{11}$ or R | | MPE$_{12}$ or R | | Group_Index$_1$ | | | |
| MPE$_{21}$ or R | | MPE$_{22}$ or R | | Group_Index$_2$ | | | |
| MPE$_{31}$ or R | | MPE$_{32}$ or R | | Group_Index$_3$ | | | |
| MPE$_{41}$ or R | | MPE$_{42}$ or R | | Group_Index$_4$ | | | |

Optional

**Fig. 24**

Octet

| P$_1$ | V$_1$ | PH$_1$ | | | | |
|---|---|---|---|---|---|---|
| MPE$_1$ or R | | P$_{lim,1}$ | | | | |
| P$_2$ | V$_2$ | PH$_2$ | | | | |
| MPE$_2$ or R | | P$_{lim,2}$ | | | | |
| B$_1$ | B$_2$ | B$_3$ | R | P$'_1$ | P$'_2$ | P$'_3$ | P$'_4$ |
| MPE$'_1$ or R | | RS_Index$_1$ | | | | |
| MPE$'_2$ or R | | RS_Index$_2$ | | | | |
| MPE$'_3$ or R | | RS_Index$_3$ | | | | |
| MPE$'_4$ or R | | RS_Index$_4$ | | | | |

Optional

**Fig. 25**

| B$_1$B$_2$B$_3$ field | |
|---|---|
| 000 | No beams reported, only read 5 octets |
| 001 | 1 beam reported, only read 6 octets |
| 010 | 2 beams reported, only read 7 octets |
| 011 | 3 beams reported, only read 8 octets |
| 100 | 4 beams reported, only read 9 octets |
| Other values are reserved | |

**Fig. 26**

Fig. 27

Fig. 28

Fig. 29

**UE perspective**

210: UE recieves higher layer configuration for PH reporting parameters as well as a list of spatial directions for MPE reporting mpe_multiTRP_pool

220: The UE determines candidate groups/beams of uplink spatial directions for simultaneous multi-panel uplink transmission

230: UE calculates the power headroom report that could contain power reduction information for every candiate group/beam of uplink spatial directions

240: The UE sends the gNB on the uplink the PHR MAC-CE for uplink STxMP

**Fig. 30**

**gNB perspective**

310: gNB sends higher layer configuration to UE for PH reporting parameters and a list of spatial directions for MPE reporting mpe_multiTRP_pool

320: gNB determines whether UE uses group based or beam based PH reporting

330: gNB receives the power headroom report MAC-CE from the UE

**Fig. 31**

**Europäisches Patentamt**
**European Patent Office**
**Office européen des brevets**

# EUROPEAN SEARCH REPORT

Application Number

EP 23 19 1778

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2022/012209 A1 (GUANGDONG OPPO MOBILE TELECOMMUNICATIONS CORP LTD [CN]) 20 January 2022 (2022-01-20) * page 4, line 34 – page 5, line 6; figure 3 * * page 5, line 25 – page 6, line 37; figure 4 * | 1-15 | INV. H04W52/36 H04B7/06 H04W52/14 |
| X | WO 2022/205028 A1 (LENOVO BEIJING LTD [CN]) 6 October 2022 (2022-10-06) * paragraph [0055] – paragraph [0056] * * paragraph [0068] – paragraph [0071] * * paragraph [0075] – paragraph [0077] * * paragraph [0097] – paragraph [0104] * | 1-15 | |
| X | WO 2022/009427 A1 (NTT DOCOMO INC [JP]) 13 January 2022 (2022-01-13) * the whole document * & US 2023/292259 A1 (MATSUMURA YUKI [JP] ET AL) 14 September 2023 (2023-09-14) * paragraph [0078] – paragraph [0080] * * paragraph [0085] * * paragraph [0098] – paragraph [0099] * * figures 4A, 4B * * figure 7 * | 1-15 | TECHNICAL FIELDS SEARCHED (IPC) H04W H04B |

The present search report has been drawn up for all claims

| Place of search | Date of completion of the search | Examiner |
|---|---|---|
| The Hague | 31 January 2024 | Sklavos, Alexandros |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 23 19 1778

This annex lists the patent family members relating to the patent documents cited in the above-mentioned European search report.
The members are as contained in the European Patent Office EDP file on
The European Patent Office is in no way liable for these particulars which are merely given for the purpose of information.

31-01-2024

| Patent document cited in search report | Publication date | Patent family member(s) | | Publication date |
|---|---|---|---|---|
| WO 2022012209 A1 | 20-01-2022 | NONE | | |
| WO 2022205028 A1 | 06-10-2022 | CN | 117063569 A | 14-11-2023 |
| | | EP | 4316082 A1 | 07-02-2024 |
| | | WO | 2022205028 A1 | 06-10-2022 |
| WO 2022009427 A1 | 13-01-2022 | CN | 115997423 A | 21-04-2023 |
| | | JP | WO2022009427 A1 | 13-01-2022 |
| | | US | 2023292259 A1 | 14-09-2023 |
| | | WO | 2022009427 A1 | 13-01-2022 |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- Physical channels and modulation. *3GPP TS 38.211 V15.3.0*, September 2018